(19) Europäisches Patentamt
European Patent Office
Office européen des brevets

(11) Numéro de publication: **0 214 171 B1**

(12) **FASCICULE DE BREVET EUROPEEN**

(45) Date de publication du fascicule du brevet: **02.05.90**

(51) Int. Cl.$^5$: **C 08 L 95/00** // C08K5/17

(21) Numéro de dépôt: **86901095.9**

(22) Date de dépôt: **12.02.86**

(86) Numéro de dépôt international: **PCT/FR86/00041**

(87) Numéro de publication internationale: **WO 86/04916 28.08.86 Gazette 86/19**

# (54) EMULSIONS CATIONIQUES DE LIANTS BITUMINEUX DU TYPE BITUME/POLYMERE ET SYSTEME EMULSIFIANT CATIONIQUE UTILISABLE NOTAMMENT POUR L'OBTENTION DE CES EMULSIONS.

(30) Priorité: **15.02.85 FR 8502212**

(43) Date de publication de la demande: **18.03.87 Bulletin 87/12**

(45) Mention de la délivrance du brevet: **02.05.90 Bulletin 90/18**

(84) Etats contractants désignés: **AT BE CH DE GB IT LI NL SE**

(56) Documents cités:
**EP-A-0 080 928**
**FR-A-1 458 754**
**FR-A-1 576 697**
**FR-A-2 249 915**
**FR-A-2 479 019**

(73) Titulaire: **ELF FRANCE, Société Anonyme dite: Tour Elf 2 place de la Coupole La Défense 6 F-92400 Courbevoie (FR)**

(72) Inventeur: **DEMANGEON, Francis**
**La Guillère**
**F-69570 Dardilly (FR)**
Inventeur: **LOPEZ, Emile**
**Impasse Sainte Blandine**
**F-38200 Vienne (FR)**

(74) Mandataire: **Boillot, Marc**
**SOCIETE NATIONALE ELF AQUITAINE Division Propriété Industrielle Tour Elf**
**F-92078 Paris la Défense Cédex 45 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 214 171 B1

**Description**

L'invention concerne des émulsions cationiques de liants bitumineux du type bitume/polymère et se rapporte également à un système émulsifiant cationique utilisable notamment pour l'obtention de ces émulsions.

La mise en émulsion cationique ou anionique des liants bitumineux est une technique bien connue. Lémulsion consiste en une dispersion de fins globules de bitume dans une phase aqueuse continue. L'émulsion sest dite anionique ou bien cationique suivant qu la charge électrique globale entourant le globule est négative ou bien positive; en présence d'un courant électrique continu, les micelles de bitume d'une émulsion se déposent sur l'anode si l'émulsion est anionique ou sur la cathode si l'émulsion est cationique.

La mise en émulsion des liants bitumineux fait appel à des agents émulsifiants favorisant la dispersion des globules de liant dans la phase aqueuse par formation d'une carapace protectrice chargée qui évite leur agglomération.

Dans le cas des émulsions anioniques, l'agent émulsifiant est du type anionique et consiste notamment en un sel alcalin d'acide gras. Cet émulsifiant est en général mélangé au liant bitumineux en quantité allant de 0,05 à 2% en poids. Le liant renfermant l'agent émulsifiant est alors dispersé dans une phase aqueuse alcaline par passage dans un émulseur.

On obtient des émulsions cationiques en utilisant des agents émulsifiants cationiques, qui consistent généralement en composés organiques azotés tels que des amines grasses, des amidoamines grasses, des imidazolines grasses, des composés d'ammonium mono et diquaternaires gras et des produits de réaction de l'un ou l'autre de tels produits avec l'oxyde d'éthylène ou de propylène. Le radical gras de ces composés émulsifiants peut posséder une structure chimique très diversifiée et les matières premières pour la préparation desdits composés émulsifiants peuvent provenir de sources diverses telles que graisses animales, raffinats de pétrole, huiles végétales et résines liquides. L'agent émulsifiant cationique est généralement dispersé dans de l'eau à laquelle on ajoute de l'acide chlorhydrique. Le chlorhydrate formé est soluble. La solution homogène ainsi obtenue, dont le pH est généralement compris entre 1 et 5, est alors mise en contact avec le liant bitumineux dans un émulseur pour former l'émulsion.

Qu'elle soit anionique ou cationique, l'émulsion est considérée comme un moyen permettant d'abaisser la viscosité des liants bitumineux. L'émulsion restitue, après rupture, le liant bitumineux additionné de l'émulsifiant mis en oeuvre pour la fabrication de l'émulsion. La présence de cet émulsifiant dans le liant bitumineux est réputée exercer un effet favorable sur l'adhésivité du liant en présence de surface minérale, à condition d'être dans un intervalle étroit de pH compris entre 1 et 6.

Le plus gros débouché des émulsions bitumineuses réside principalement dans les opérations de construction ou d'entretien routier, et sous forme essentiellement d'émulsions cationiques. L'expérience dans ce domaine montre que les émulsions cationiques sont plus faciles à appliquer et évitent les nombreux inconvénients des émulsions anioniques tels que possibilité de remise en émulsion en présence d'eau, de rupture non prévisible au stockage et d'une faible adhésivité du liant à la surface de l'agrégat.

Les émulsions bitumineuses cationiques sont principalement utilisées suivant deux types de techniques, à savoir l'enduisage et l'enrobage.

L'enduisage consiste à coller des couches de gravillons sur la surface de la chaussée à l'aide de l'émulsion bitumineuse, afin de régénérer la rugosité et imperméabiliser la surface. Cette technique contribue à créer une nouvelle couche de roulement.

En enrobage, l'émulsion bitumineuse permet la mise en oeuvre de couches d'épaisseur allant de 0,4 cm à plus de 20 cm, qui s'intègrent à tous les niveaux d'une structure routière.

Actuellement, en raison de la réduction générale des budgets d'entretien et de construction des chaussées, l'usage de l'émulsion de bitume est particulièrement limité à l'entretien de la surface des chaussées. Néanmoins, en raison des sollicitations mécaniques extrêmes auxquelles sont soumises les mosaïques des revêtements superficiels, les bitumes routiers de classes émulsionnables ne présentent pas le caractéristiques suffisantes leur permettant de supporter les contraintes tangentielles dues aux charges lourdes et aux trafics élevés.

Dans ces conditions, les liants bitumineux constitués uniquement de bitume sont de plus en plus remplacés par des liants bitumineux du type bitume/polymère. Ces liants bitume/polymère sont des produits obtenus à partir de bitumes additionnés de polymères et éventuellement modifiés par ces derniers en présence ou non d'un réactif comme le soufre ou d'un agent modificateur et/ou d'un adjuvant.

Des exemples de liants bitumineux du type bitume/polymère comprennent notamment:

des bitumes modifiés par des polymères oléfiniques ou par des mélanges d'acides gras et d'alcools supérieurs [brevet français N° 76 27936 (publication N° 2 364 960) du 17—09—76);

des bitumes modifiés comme précédemment et sur lesquels sont greffés des élastomères [brevet français N° 76 27937 (publication N° 2 364 961) du 17—09—76);

des bitumes modifiés par le norbornène [brevet français N° 76 30316 (publication N° 2 367 102) du 08—10—76);

des bitumes modifiés par des dihalogénopolybutadiènes servant de structure d'accueil à des copolymères séquencés et à des élastomères covulcanisables [brevet français N° 78 06160 (publication N° 2 418 812) du 03—03—78);

des bitumes modifiés par des copolymères blocs styrène/butadiène ou styrène/isoprène [brevet français N° 76 39233 (publication N° 2 376188) du 28—12—76);

des bitumes modifiés par des copolymères blocs styrène/diène carboxylé [addition N° 78 31689 (publication N° 2 440 967) du 09—11—78 au brevet français N° 76 39233];

des bitumes modifiés par des cires de polyéthylène [brevet français N° 77 29953 (publication N° 2 405 288) du 05—10—77);

des bitumes modifiés par des polymères acryliques élastomères [brevet français N° 78 12135 (publication N° 2 424 301) du 25—04—78);

des bitumes modifiés par des polymères du type alcool polyvinylique, polyamide, polyester, polyuréthanne;

des bitumes modifiés par des copolymères d'oléfines entre elles, notamment copolymères éthylène/propylène ou copolymères éthylène/propylène/diène, ou par des copolymères d'oléfines et de monomères vinyliques, notamment copolymères éthylène/acétate de vinyle, copolymères éthylène/ester acrylique, copolymères éthylène/chlorure de vinyle;

des bitumes modifiés par des polymères spéciaux du type des polymères halogénés, et notamment polymères fluorés comme les poly-tétrafluoroéthylènes ou polymères fluorés et chlorés, ou du type, des polymères silicones tels que les polysiloxanes;

des compositions bitumineuses obtenues par mise en contact d'un bitume avec une solution mère contenant un polymère, notamment un copolymère bloc styrène/diène conjugué, et du soufre ou un polysulfure ou autre agent réactif, notamment monomère vinylique, ainsi qu'une couple pétrolière et/ou un huile de houille [brevets français N° 78 18534 (publication N° 2 429 241) du 21—06—78 et N° 82 10095 (publication N° 2 528 439) du 10—06—82; brevets français N° 79 10 987 (publication N° 2 455 623) du 2—05—79 et N° 82 16433 (publication N° 2 533 935) du 30—09—82];

des bitumes modifiés par un mélange d'au moins deux des polymères cités plus haut, et

des mélanges de tels bitumes modifiés comme indiqué plus haut.

Néanmoins, la mise en émulsion de ces différents bitumes modifiés par l'incorporation de polymères ne peut être effectuée telle quelle, car l'amélioration des propriétes des bitumes, augmente systématiquement la visosité du milieu, ce qui empêche la fabrication des émulsions de liants modifiés par des polymères en faisant appel aux appareillages industriels conventionnels. Dans ces conditions, il est nécessaire d'utiliser un ou plusieurs solvants fluidifiants, dont le rôle principal est de réduire la viscosité du milieu et de l'amener dans une plage équivalente à celle de travail des bitumens de pénétration 80/100 et 180/220 entre 100°C et 150°C, soit 1 à 10 poises. Le ou les solvants choisis ont, entre autres, pour propriétés d'être partiellement volatils, tout en conservant des fractions lourdes à propriétés plastifiantes et compatibilisantes entre le polymère et le bitume.

La demanderesse a observé que la formulation d'émulsions à rupture rapide à partir de liants du type bitume/polymère fluidifiés ou fluxés par des huiles d'origine pétrolière ou issues de la distillation de la houille en présence d'émulsifiants cationiques conventionnels tels que ceux cités plus haut, conduisait à des émulsions dont la rupture est mauvaise et aléatoire. On a constaté par ailleurs que cette rupture se traduisait par une coagulation partielle des globules de bitume sans jamais aboutir dans les premières heures, voire même après plusieurs jours, à la coalescence totale des micelles de l'émulsion, et cela quels soient le type d'émulsifiant choisi et la concentration dudit émulsifiant. Ce défaut confère au liant bitumineux résiduel des caractéristiques mécaniques, qui sont très inférieures à celles du liant bitume/polymère anhydre de départ. Il limite donc le développement des émulsions de liant bitume/polymère dans le cadre de la réalisation de revêtements minces et superficiels sur routes à très forte circulation. La demanderesse a par ailleurs mis en évidence que le phénomène dépendait uniquement d'une double interaction entre le solvent et l'émulsifiant, pour un agent émulsifiant coventionnel tel que défini précédemment et quelle que soit la nature chimique de cet émulsifiant, et entre le solvant et les sels contenus dans l'eau, à savoir sels alcalino-terreux et métalliques. La nature du bitume et son origine, le type de polymère associé au bitume, la présence de réactif réticulant ou stabilisant n'exercent par contre aucune influence sur le phénomène.

On a trouvé que l'on pouvait supprimer l'influence néfaste des interactions entre solvant et émulsifiant et entre solvant et sels contenus dans l'eau en utilisant dans l'émulsion cationique de liant bitume/polymère un système émulsifiant spécifique qui résulte de l'association d'au moins un émulsifiant azoté cationique avec un adjuvant consistant en au moins un sel séquestrant hydrosoluble d'un acide carboxylique azoté polyfonctionnel.

L'invention a donc pour objet des émulsions cationiques de liants bitumineux du type bitume/polymère qui sont constituées d'une dispersion d'une phase organique consistant en le liant bitume/polymère dans une phase aqueuse renfermant un émulsifiant azoté cationique et un acide, ce dernier étant présent en quantité telle que le pH de la phase aqueuse ait une valeur comprise entre 3 et 9, lesdites émulsions se caractérisant en ce que leur phase aqueuse renferme également un adjuvant consistant en au moins un sel hydrosoluble d'acide carboxylique azoté polyfonctionnel, qui possède, dans un intervalle de pH allant de 3 à 9, un pouvoir séquestrant vis à vis des ions métalliques équivalent à une fixation d'au moins 5 mg d'ions calcium par grammes de sel séquestrant.

De préférence l'adjuvant est constitué d'un ou plusieurs séquestrants hydrosolubles répondant à la formula (I)

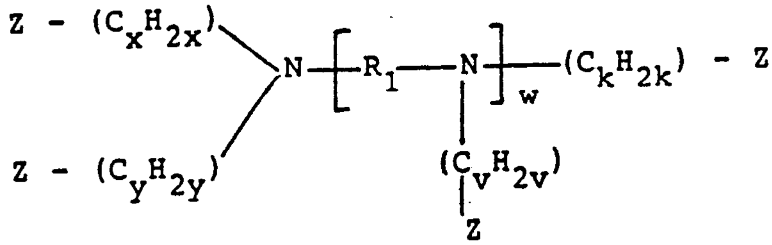 (I)

dans laquelle les Z, identiques ou différents, représentent un radical choisi parmi les radicaux —OH, —COOH et —COOM avec au moins un Z désignant und radical —COOM, les symboles x, y, v et k sont des nombres entires, identiques ou différents, allant de 1 à 6, et de préference de 1 à 4, w est un nombre prenant les valeurs entières de 0 a 3, $R_1$ est un radical divalent hydrocarbylène, en particulier alcoylène, en $C_1$ à $C_8$, et de préférence en $C_2$ à $C_4$, éventuellement substitué par un ou plusieurs groupements fonctionnels, notamment groupements OH, et le symbole M, pouvant être différent d'un groupe Z à l'autre, représente un atome de métal alcalin, un radical

$$-\overset{+}{N}H_3-NH_2$$

ou un radical de formule

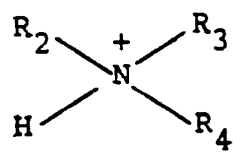

dans laquelle les symboles $R_2$ à $R_4$, identiques ou différents, représentent chacun un atome d'hydrogène ou un radical organique, et en particulier un radical monovalent hydrocarbyle en $C_1$ à $C_8$, de préférence en $C_1$ à $C_6$, renfermant éventuellement un ou plusieurs groupements fonctionnels et notamment un groupement OH, certains des radicaux $R_2$ à $R_4$ pouvant être réunis pour forme un hétérocycle avec l'atome d'azote auquel ils sont rattachés, lesdits séquestrants n'ayant pas de propriétés émulsifiants.

Le métal alcalin que peut représenter le reste M est choisi parmi les métaux du groupe IA de la Classification Périodique des Eléments telle que présentée dans HANDBOOK OF CHEMISTRY AND PHYSICS, 46th Edition, publié par THE CHEMICAL RUBBER Co, ledit métal alcalin consistant de préférence en sodium ou potassium.

Les radicaux hydrocarbyles éventuellement substitués par des groupements fonctionnels que peuvent représenter les symboles $R_2$ à $R_4$ sont en particulier des radicaux alcoyles ou hydroxyalcoyles en $C_1$ à $C_8$, et de préférence en $C_1$ à $C_6$, tels que méthyle, éthyle, propyle, butyle, pentyle, hexyle, hydroxyméthyle, hydroxyéthyle, hydroxypropyle, ou encore des radicaux cycloalcoyles en $C_4$ à $C_8$, notamment cyclopentyle ou cyclohexyle, ou des radicaux aromatiques en $C_6$ à $C_8$ tels que phényle ou tolyle. Lorsque certains des radicaux $R_2$ à $R_4$ sont réunis pour former un hétérocycle avec l'atome d'azote auquel ils sont rattachés cet hétérocycle est en particulier aromatique et notamment du type pyridinique ou alicyclique et notamment du type pipéridinique.

Les composés de formule (I) sont les sels résultant de la réaction d'acides carboxyliques azotés polyfonctionnels de formule (II)

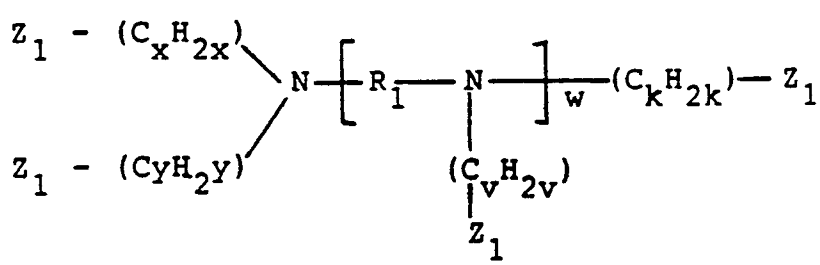 (II)

dans laquelle les $Z_1$, identiques ou différents, représentent un radical —OH ou —COOH avec au moins un reste $Z_1$ désignant un radical —COOH, et les symboles x, y, v, k, et $R_1$ ont le significations précitées, avec un composé choisi parmi les hydroxydes des métaux alcalins du groupe IA de la Classification Périodique des Eléments définie plus haut, l'ammoniac, anhydre ou hydraté et les amines de formule

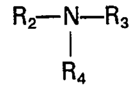

les symboles $R_2$ à $R_4$ ayant les définitions données précédemment.

Tout particulièrement l'adjuvant peut consister et un ou plusieurs des sels dont les formules sont données ci-après:

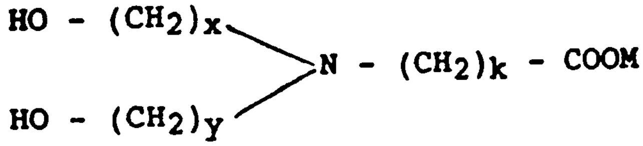

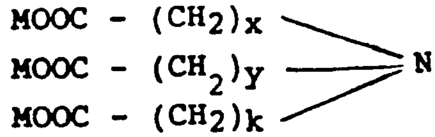

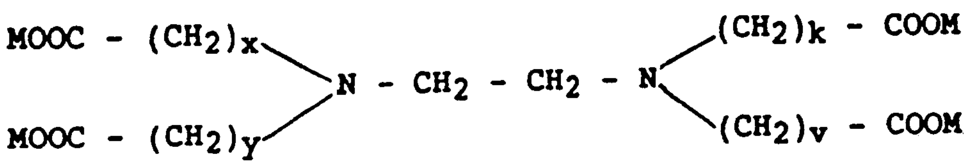

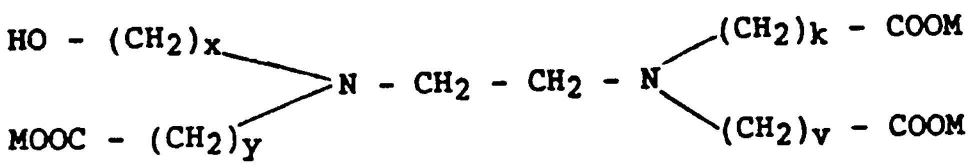

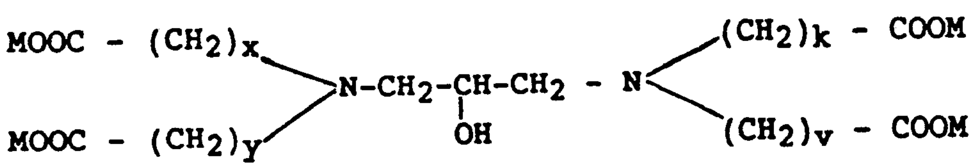

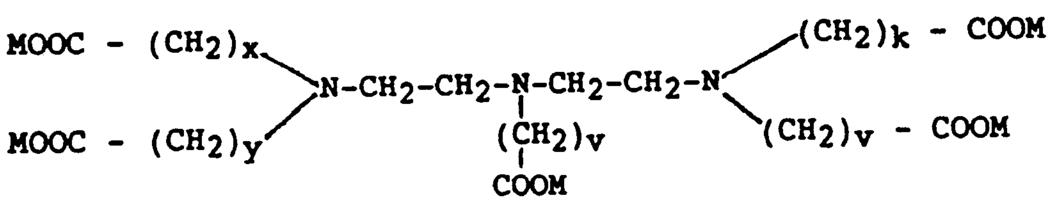

avec dans ces formules les symboles x, y, v, k et M ayant les significations données plus haut.

Comme exemples de composés ayant les formules précitées, on peut citre la N,N bis (carboxyméthyl) glycine tétrasodée, le sel disodique de l'acide N-(hydroxy-2 éthyl) glycine, le glycinate N,N'-1,2-éthanediyl bis-N-(carboxyméthyl) d'hydrazine, le sel dipotassique de l'acide N-(hydroxy-2 éthyl) glycine et le sel potassique de l'acide N,N-di (hydroxy-2 éthyl) glycine.

La concentration globale en adjuvant sequestrant hydrosoluble dans la phase aqueuse de l'émulsion peut varier assez largement en fonction de la dureté l'eau utilisée pour produire l'émulsion et/ou de la teneur total en ions métalliques de cette eau. Avantageusement cette concentration peut représenter 0,005% à 0,5% et de préférence 0,01% à 0,3% en poids de l'émulsion.

L'émulsifiant azoté cationique présent dans l'émulsion peut consister en un ou plusieurs des agents émulsifiants azotés cationiques connus, lesdits agents émulsifiants pouvant être notamment des monoamines grasses, des polyamines, des amidoamines, des amidopolyamines, des sels ou oxydes desdites amines et amidoamines ainsi que des produits de réaction des composés précités avec l'oxyde

d'éthylène et/ou l'oxyde de propylène. Une présentation générale des agents émulsifiants azotés cationiques, parmi lesquels peuvent être choisis les agents émulsifiants utilisables suivant l'invention, est donnée dans le manuel de KIRK-OTHMER intitulé ENCYCLOPEDIA OF CHEMICAL TECHNOLOGY, Third Edition, Volume 22, pages 377 à 384.

Suivant une forme de mise oeuvre avantageuse de l'invention, l'émulsifiant azoté cationique est formé par l'association d'un ou plusieurs agents émulsifiants A choisis parmi les agents émulsifiants azotés cationiques du type monoamines, diamines, amidoamines, oxydes de telles amines ou amidoamines, produits de réaction de tels composés avec l'oxyde d'éthylène et/ou de propylène et sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine, le rapport de la quantité pondérale globale du ou des composés A à la quantité pondérale totale des composés A et B allant en particulier de 5% à 95%. Cette forme de mise en oeuvre conduit à une rupture franche et rapide de l'émulsion qui permet au liant bitume/polymère de recouvrer immédiatement ses propriétés initiales.

L'émulsifiant azoté cationique utilisable suivant l'invention peut consister notamment en un ou plusieurs agents émulsifiants azotés cationiques choisis parmi les composés suivants:

les monoamines grasses de formule (III) $R_6$—$NH_2$ dans laquelle $R_6$ représente un radical hydrocarboné gras et notamment un radical alcoyle ou alcényle en $C_8$ à $C_{22}$ tel que lauryle, stéaryle, oléyle; et

les polyamines et amidopolyamines de formule (IV)

$$R—X(C_nH_{2n})—NH_2 \qquad (IV)$$

dans laquelle X représente un reste divalent ayant la formule

$$-(CO)_r-NH\left[C_mH_{2m}-NH\right]_p$$ ou 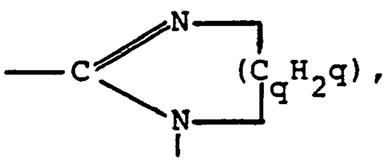

R est un radical hydrocarbyle, et notamment alcoyle ou alcényle, ayant jusqu'à 22 atomes de carbone et de préférence en $C_8$ à $C_{22}$, m et n, identiques ou différents, sont des nombres entiers allant de 1 à 8 et de préférence de 1 à 6, p est un nombre prenant des valeurs entières de 0 à 6 et de préférence de 0 à 3, r est égal à 0 ou 1 et q est un nombre entier allant de 2 à 10 et de préférence de 2 à 4.

Dans la forme de mise en oeuvre pour laquelle l'émulsifiant azoté cationique renferme un ou plusieurs agents émulsifiants azotés cationiques A en association avec un ou plusieurs agents azotés cationiques B tels que définis généralement plus haut, les agents émulsifiants A peuvent être en particulier choisis parmi:

les monoamines de formula (III)

les diamines et amidoamines de formula (V)

$$R—(CO)_r—NH—(C_nH_{2n})—NH_2 \qquad (V)$$

les amines de formule (VI)

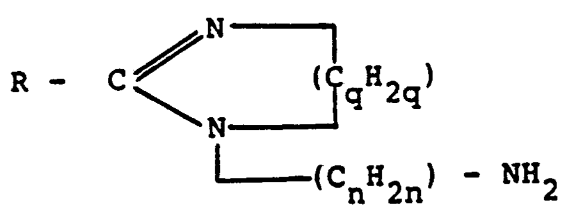

(VI)

les composés d'ammonium quaternaire de formule (VII)

$$(R_7)_j\overset{+}{N}(R_8)_hY^- \qquad (VII)$$

tandis que les agents émulsifiants B peuvent être en particulier choisi parmi les polyamines ou les amidopolyamines de formule (VIII)

$$R-(CO)r-NH\left[C_mH_{2m}-NH\right]_s(C_nH_{2n})-NH_2 \qquad (VIII)$$

avec dans ces formules s représentant un nombre entier allant de 1 à 6 et de préférence de 1 à 3, les $R_7$, identiques ou différents, désignant des radicaux hydrocarbyles, éventuellement substitués par un ou plusieurs groupements fonctionnels, en $C_6$ à $C_{22}$, et notamment des radicaux alcoyles ou alcényles en $C_8$ à $C_{22}$ ou un radical benzyle, les $R_8$ identiques ou différents représentant des radicaux alcoyles en $C_1$ en $C_6$, éventuellement hydroxylés, notamment méthyle, éthyle, propyle, hydroxyéthyle, hydroxypropyle, $Y^-$ désignant un anion d'un acide minéral, en particulier un anion chlorure, ou d'un acide organique, notamment un anion acétate ou formiate, h étant un nombre égal à (4−j) et j étant un nombre prenant les valeurs 1, 2 ou 3, tandis que R, r, m, n et q ont les significations données plus haut.

Des agents émulsifiants azotés cationiques préférés que l'on peut utiliser comme agent émulsifiants A ont les formules suivants:

$$R_9 - (CO)_r - NH - (CH_2)_3 - NH_2 \qquad (IX)$$

$$R_9 - (CO)_r - \underset{\substack{|\\ R_{10}}}{CH} - (CH_2)_2 - NH_2 \qquad (X)$$

$$(R_9)_g\ (C_6H_5CH_2)\ \overset{+}{N}\ (R_{10})_l\ Y_1^- \qquad (XI)$$

$$(R_9)_j\ \overset{+}{N}\ (R_{10})_h\ Y_1^- \qquad (XII)$$

avec dans ces formules $R_9$ désignant un radical alcoyle ou alcényle en $C_{12}$ à $C_{22}$, notamment stéaryle et/ou oléyle, $R_{10}$ désignant un radical alcoyle ou hydroxyalcoyle en $C_1$ à $C_3$, $Y_1^-$ étant un anion chlorure ou acétate, 1 étant un nombre égal (3−g) et g étant un nombre prenant les valeurs 1, 2 ou 3 tandis que r, j et h sont des nombres ayant les significations données plus haut.

D'autres agents émulsifiants azotés cationiques préférés, que l'on peut utiliser notamment comme composés émulsifiants B, répondent aux formules (XIII) et (XIV) suivantes:

$$R_9 - \left[NH - (CH_2)_3\right]_f - NH_2 \qquad (XIII)$$

et

$$R_9 - CO - \left[NH - (CH_2)_3\right]_f - NH_2 \qquad (XIV)$$

dans lesquelles f désigne un nombre prenant les valeurs 2, 3, 4 ou 5 et $R_9$ à la signification précédente.

La quantité totale d'émulsifiant azoté cationique dans l'émulsion peut varier assez largement. Cette quantité peut représenter avantageusement de 0,03% à 3% et de préférence de 0,06% à 2% du poids total de l'émulsion pour l'obtention d'émulsion à rupture rapide et à stabilité satisfaisante.

Les acides que l'on utilise pour régler pH de l'émulsion à une valeur allant de 3 à 9 peuvent être choisis parmi les acides minéraux de différentes forces d'acidité ou encore parmi les acides mono ou polycarboxyliques saturés ou insaturés, et éventuellement hydroxylés, qui sont définis dans le brevet français N° 81 22275 (publication N° 2 517 317) du 27—11—81. Des acides préférés sont les acides chlorhydrique, nitrique, phosphorique, acétique, oxalique, citrique et formique.

Le liant bitume/polymère, qui est mis en émulsion cationique, peut être l'un quelconque des produits obtenus à partir de bitumes additionnés d'un ou plusieurs polymères, et éventuellement modifiés par ce ou ces polymères en présence ou non d'un réactif comme le soufre ou un agent libérant du soufre comme un polysulfure, d'un agent de couplage ou de vulcanisation, lesdits bitumes pouvant être également additionnés, si besoin est, d'un agent de fluxage tel qu'une coupe pétrolière, une huile de houille ou un mélange de tels produits.

Des liants bitume/polymère préférés peuvent être choisis parmi les divers liants bitume/polymère cités précédemment à titre d'exemples.

L'émulsion suivant l'invention peut encore renfermer un agent épaississant consistant en un ou plusieurs composés organiques hydrosolubles, qui sont susceptibles, dans le domaine de pH allant de 3 à 9, d'augmenter la vicosité de l'émulsion sans modifier la viscosité de la phase aqueuse seule renfermant l'émulsifiant azoté cationique.

Parmi les composé utilisables comme agents épassissants on peut citer notamment des gommes naturelles hydrosolubles du type gomme guar, gomme arabique, gomme ghatti, gomme karaya, gomme tragacanth, gomme locustbean, ou encore des polyuréthannes hydrosolubles de faible masse moléculaire et en particulier des polyuréthannes de masse moléculaire inférieure à 20 000 qui résultent de la réaction

d'un polyisocyanate tel que di-isocyanate de toluylène, 4,4'-di-isocyanate de diphényleméthane, 1,5-di-isocyanate de naphtylène, 1,6-di-isocyanate d'hexaméthylène, 3,3'-tolidène-4,4'-di-isocyanate et m-phénylène disulphonyle di-isocyanate, avec des polyols du type polyesterpolyols ou polyétherpolyols. Comme polyesterpolyols on peut citer les produits de réaction d'un acide polycarboxylique tel que l'acide adipique, phtalique ou maléique avec un polyol ou un mélange de polyols comme l'éthylène glycol, le propylène glycol, le diéthylène glycol, le butanediol, le glycérol, le triméthylol propane, l'hexaméthylènetriol et le pentaerythritol, tandis que des polyétherpolyols appropriés peuvent être choisis parmi les produits de réaction de polyols du type éthylène glycol, propylène glycol, glycérol, triméthylol-propane, pentaerythritol, méthylglycoside, sorbitol et saccharose avec des époxydes du type oxyde d'éthylène, oxyde de propylène, époxystyrène.

La quantité pondérale d'agent épaississant dans l'émulsion peut représenter avantageusement de 5% à 30% du poids total de l'ensemble formé de l'émulsifiant azoté cationique, de l'adjuvant carboxylé et de l'agent épaississant.

Les émulsions cationiques suivant l'invention sont préparées en réalisant, dans une zone de formation d'émulsion et notamment dans un appareil du type émulseur, une dispersion intime du liant bitume/polymère dans une phase aqueuse renfermant un quantités appropriées pour obtenir les concentrations définies plus haut, l'émulsifiant salifié par un acide en quantité suffisante pour obtenir la valeur désirée du pH, le composé séquestrant carboxylé et éventuellement l'agent épaississant. Pour ce faire, on amène séparément et simultanément à la zone de formation de l'émulsion d'une part le liant bitume/polymère, sous la forme d'une masse fondue dont la température est comprise entre 80°C et 180°C et de préférence entre 120°C et 160°C, et d'autre part la phase aqueuse renfermant les ingredients précités et possédant une température comprise entre 15°C et 80°C et de préférence entre 20°C et 60°C, et l'on maintient l'ensemble dans ladite zone pendant un temps suffisant pour former une émulsion.

La phase aqueuse, que l'on mélange avec le liant bitume/polymère dans la zone de formation d'émulsion, est préparée en introduisant l'émulsifiant, le composé séquestrant carboxylé, l'acide et l'agent épaississant éventuel dans la quantité d'eau nécessaire à la fabrication de l'émulsion préalablement portée à une température comprise entre 30 et 75°C. Les quantités d'émulsifiant, de composé séquestrant et d'agent épaississant éventuel ajoutées à l'eau sont choisies pour que les concentrations de ces ingrédients dans l'émulsion résultante soient situées dans les intervalles définis précédemment. L'acide est utilisé en quantité suffisante pour transformer, si besoin est, l'émulsifiant cationique en sel soluble et pour amener le pH de l'émulsion à la valeur choisie. Les ingrédients, à savoir émulsifiant azoté cationique, adjuvant séquestrant carboxylé acide et agent épaississant éventuel, ajoutés à l'eau peuvent l'être dans un ordre quelconque. En particulier le composé séquestrant carboxylé peut être introduit dans l'eau avant ou après salification de l'émulsifiant par l'acide. Le composé séquestrant carboxylé peut être également formé in situ dans l'eau à partir de l'acide carboxylique précurseur correspondant et d'une base susceptible de fournir des restes salifiants M tels que définis plus haut.

Dans une forme avantageuse de mise en oeuvre, au moins l'émulsifiant et le composé séquestrant carboxylé ou son précurseur acide carboxylique sont incorporés simultanément à l'eau sous la forme d'un mélange, dit système émulsifiant cationique, réalisé préalablement, puis on ajoute l'acide et, s'il est utilisé, l'agent épaississant.

Ledit système émulsifiant cationique comporte donc un émulsifiant azoté cationique consistant en un ou plusieurs agents émulsifiants azotés cationiques et un adjuvant consistant en au moins un composé séquestrant carboxylé hydrosoluble tel que défini précédemment ou son précurseur acide carboxylique, ledit adjuvant étant en particulier formé d'au moins un composé carboxylé choisi parmi les composés de formule (I) ou leurs précurseurs acides carboxyliques de formule (II).

Dans un tel système émulsifiant la quantité pondérale de l'émulsifiant azoté cationique représente en particulier 10 à 99%, et de préférence 25 à 90%, de la quantité pondérale totale d'émulsifiant et d'adjuvant.

L'émulsifiant azoté cationique présent dans le système émulsifiant cationique peut consister notamment en un ou plusieurs des agents émulsifiants azotés cationiques choisis parmi les monoamines grasses de formule (III) et les polyamines et amidopolyamines de formule (IV).

Dans une forme préférée de mise en oeuvre, l'émulsifiant azoté cationique du système émulsifiant cationique est constitué par l'association d'un ou plusieurs agents émulsifiants azotés cationiques A avec un ou plusieurs agents émulsifiants azotés cationiques B tels que définis précédemment, le rapport de la quantité pondérale globale du ou des composés A à la quantité pondérale totale des composés A et B allant en particulier de 5 à 95%.

En particulier les composés A peuvent être choisis parmi les composés définis plus haut par les formules (III), (V), (VI) et (VII), et tout particulièrement parmi les composés A définis par les formules (IX), (X), (XI) et (XII), tandis que les composés B peuvent être choisis parmi les composés définis précédemment par la formule (VIII), et tout particulièrement parmi les composés B définis par les formules (XIII) et (XIV).

Les système émulsifiant cationique peut encore renfermer un agent épaississant consistant en un ou plusieurs composés organiques hydrosolubles choisis parmi ceux qui ont été définis plus haut, et en particulier parmi les gommes naturelles hydrosolubles ou parmi les polyuréthannes hydrosolubles de faible masse moléculaire et notamment ceux résultant de la réaction entre un polyisocyanate et un polyol du type polyesterpolyol ou polyétherpolyol.

La quantité pondérale d'agent épaississant dans le système émulsifiant cationique représente

avantageusement de 5% à 30% du poids total de l'ensemble comprenant l'émulsifiant, l'adjuvant carboxylé et l'agent épaississant.

Dans la préparaton de l'émulsion la phase aqueuse renfermant l'émulsifiant azoté cationique, l'adjuvant carboxylé, l'acide et l'agent épaississant éventuel d'une part et le liant bitume/polymère d'autre part sont amenés à la zone de formation d'émulsion en proportions telles que l'émulsion cationique résultante renferme avantageusement, en poids, 30 à 85% et de préférence 50 à 80% de liant bitume/polymère.

Les émulsions cationiques de liant bitume/polymère suivant l'invention se caractérisent par une rupture rapide et irréversible au contact des granulats à l'issue de quoi le liant bitume/polymère recouvre immédiatement et totalement ses propriétés initiales.

Les émulsions suivant l'invention conviennent tout particulièrement pour des applications de technique routière, d'étanchéité en génie civil ou en bâtiment ou encoure pour des utilisations industrielles.

L'invention est illustrée par les examples ci-après donnés à titre non limitatif.

Dans ces exemples, qui décrivent des émulsions cationiques de liants bitumineux préparés suivant l'art antérieur (exemples témoins) et suivant l'invention, les grandeurs ci-après sont données pour caractériser les échantillons d'émulsion préparés:

diamètre moyen de la distribution globulaire du liant bitumineux, c'est-à-dire la valeur du diamètre correspondant à la valeur 50% sur la cour be de répartition granulométrique pondérale cumulée des globules du liant bitumineux obtenue par analyse granulométrique laser;

indice de rupture aux fines siliceuses (en abrégé IR), déterminé suivant la norme française NF T 66 017 et représentant la quantité minimale, exprimée en grammes, de sable siliceux de granulométrie 40 à 150 µm entraînant la rupture de 100 g d'émulsion avec formation d'un caillot sable/liant bitumineux (une valeur de l'indice de rupture d'environ 80 correspond à une rupture rapide de l'émulsion, ce qui est recherché);

temps de rupture de l'émulsion sur plaques d'enrobés bitumineux à l'aide de gravillons microdiorite de 10 à 14 mm de diamètre (sur une surface formée d'un enrobé bitumineux on dispose l'émulsion puis recouvre cette émulsion au moyen des gravillons et l'on compte, à partir de l'instant de recouvrement de l'émulsion par les gravillons, le temps écoulé jusqu'à la rupture de l'émulsion, qui se manifeste par une fixation des gravillons au support).

En outre, on a déterminé également les caractéristiques suivantes au cours de l'essai d'évaluation de l'indice de rupture:

quantité de liquide relargué après l'obtention du caillot de fines siliceuses enrobées du liant bitumineux rompu et teneur en eau de ce liquide (une faible quantité de liquide renfermant une teneur élevée en eau traduit une rupture rapide et franche de l'émulsion); et

cohésivité/élasticité du caillot de fines siliceuses enrobées de liant bitumineux dès la formation de ce caillot, déterminée par essai de traction suivant la norme française NF T 46 002.

La composition du liquide, c'est-à-dire de la phase eau/émulsion, qui est relargué lors de la rupture de l'émulsion traduit de manière objective la quantité d'émulsion non rompue, cette information étant en relation avec la phénomène de retard ou d'arrêt dans la rupture de l'émulsion. Une faible quantité de liquide renfermant une teneur élevée en eau correspond à une rupture rapide et franche de l'émulsion tandis qu'une quantité plus importante de liquide renfermant une faible teneur en eau traduit une rupture lente de l'émulsion, ce qu'il faut éviter.

De même la cohésivité ou l'élasticité immédiate du caillot de fines siliceuses enrobées de liant bitumineux est une caractéristique qui rend compte de la coalescence des amas de globules du liant bitumineux rompu et qui donne une indication de la faculté du liant bitumineux à recouvrer ses propriétés viscoplastiques ou élastomériques initiales.

Les émulsions décrites dans les exemples ont éte préparées en utilisant suivant les cas soit de l'eau de ville présentant une dureté totale correspondant à un titre hydrotimétrique égal à 22° soit une eau industrielle possédant une dureté totale correspondant à un titre hydrotimétrique de 24° et renfermant 15 mg d'ions ferreux par litre.

Dans les exemples donnés ci-dessous, les quantités et pourcentages sont exprimés en poids sauf indication contraire.

Exemple 1

Dans cet exemple, qui représente un exemple témoin, on préparait un émulsion cationique à 70% d'un litant bitumineux consistant en un bitume ordinaire de pénétration 180/220 en opérant comme suit.

On formait tout d'abord une phase aqueuse consistant en une solution aqueuse de chlorhydrate de l'agent émulsifiant en réalisant une dispersion à 0,16% de propylènediamine-1,3 de suif (émulsifiant azoté cationique) dans le l'eau industrielle puis en ajoutant à la dispersion 0,14% d'acide chlorhydrique à 20° Bé (d = 1,16).

L'émulsion était alors produite dans un émulseur dans lequel on introduisait, simultanément et séparément, 300 parties de la phase aqueuse préparée comme indiqué ci-dessus et portée à 45°C ainsi que 700 parties du bitume porté à 145°C.

On obtenait 1000 parties d'une émulsion cationique témoin dont les caractéristiques sont données ci-après.

| | |
|---|---|
| pH: | 3,5 |
| Diamètre moyen des globules de bitume (µm): | 3—5 |
| Indice de rupture: | 70 |
| Quantité de liquide relargué après 1 heure (% de l'émulsion): | 6 |
| Quantité d'eau dans le liquide relargué (%): | 95 |
| Cohésivité du caillot: | bonne |
| Temps de rupture de l'émulsion sur plaques plaques d'enrobés (mn): | environ 30 |

La quantité de liquide relargué est faible et il s'agit essentiellement d'eau. Le temps de rupture de l'émulsion sur plaque d'enrobé est d'environ 30 minutes pour indice de rupture de 70. L'émulsion cationique ainsi produite a un comportement considéré comme satisfaisant en ce qui concerne le phénomène de rupture.

Exemple 2

Dans cet exemple, qui représente un second exemple témoin, on préparait trois émulsions cationiques (essais I, II et III) à 70% d'un liant bitumineux du type bitume/polymère constitué du produit de réaction à température élevée d'un bitume routier de pénétration 80/100 avec une solution mère consistant en une solution de soufre et d'un copolymère séquencé de styrène et de butadiène renfermant 25% de styrène et 75% de butadiène dans une coupe pétrolière obtenue en raffinerie après craquage catalytique des distillats lourds et dénommée "Light Cycle Oil", ladite coupe ayant un intervalle de distillation de l'ordre de 180°C à 360°C.

Pour préparer le liant bitume/polymère on opérait comme suit. Vingt parties du copolymère séquencé étaient dissoutes dans 80 parties de la coupe pétrolière à une température comprise entre 80°C et 100°C. Après complète dissolution du polymère, on ajoutait 0,6 partie de soufre à la solution. Quinze parties de la solution ainsi préparée étaient mélangées à 85 parties du bitume routier et le mélange était porté à une température comprise entre 170°C et 180°C pendant environ 1,5 heure. On obtenait ainsi un liant bitume/polymère dont les principales caractéristiques sont indiquées ci-après.

| | |
|---|---|
| Viscosité à 160°C: | 89 mPa.s |
| Pseudo-viscosité à 50°C avec un orifice de 10 mm (NF T 66005): | 115 secondes |
| Essai de traction à −10°C avec un vitesse de 500 mm/mn | |
| — Contrainte au seuil (τs): | $5,7 \times 10^5$Pa |
| — Contrainte à la rupture (τr): | $1,07 \times 10^5$Pa |
| — Allongement au seuil (εs): | 20% |
| — Allongement à la rupture (εr): | > 900% |

La mise en émulsion du liant bitume polymère était effectuée en utilisant le mode opératoire suivant.

On formait tout d'abord une phase aqueuse consistant une solution aqueuse du chlorhydrate de l'émulsifiant en réalisant une dispersion de propylène diamine-1,3 de suif (émulsifiant azoté cationique) dans de l'eau industrielle, puis en ajoutant à la dispersion une quantité appropriée d'acide chlorhydrique à 20° Bé.

Exprimés en pourcentages de la phase aqueuse, les quantités d'émulsifiant et d'acide chlorhydrique utilisées représentaient respectivement 0,15% et 0,14% pour l'essai I, 0,25% et 0,21% pour l'essai II et 0,08% et 0,06% pour l'essai III.

L'émulsion était alors produite dans un émulseur dans lequel on introduisait, simultanément et séparément, 300 parties de la phase aqueuse préparée comme indiqué ci-dessus et portée à 45°C ainsi que 700 parties du liant bitume/polymère porté à 145°C.

On obtenait 1000 parties d'émulsion cationique témoin dans chaque essai dont les caractéristiques sont données ci-après.

| Essai: | I | II | III |
|---|---|---|---|
| pH: | 3,5 | 4 | 4.2 |
| Diamètre moyen des globules de liant (µm): | 3—5 | 3—5 | 3—6 |
| Indice de rupture | 50 | 80 | 40 |
| Quantité de liquide relargué après 1 heure (% de l'émulsion): | 35 | 21 | 45 |
| Quantité d'eau dans le liquide relargué (%): | 32 | 60 | 32 |
| Cohésivité du caillot: | nulle | nulle | nulle |
| Temps de rupture de l'émulsion sur plaques d'enrobés (mn): | >180 | >180 | >180 |

Dans les trois essais la totalité du liant bitume/polymère est mise en émulsion et les émulsions cationiques produites présentent une bonne stabilité au stockage.

Par contre, bien que pour les trois émulsions les valeurs de l'indice de rupture laissent présager des ruptures rapides à trés rapides, la quantité de liquide relargué dans l'essai de détermination de cet indice est importante et ce liquide renferme un fort taux d'émulsion non rompue. En outre, le caillot du mélange de sable est de liant bitume/polymère formé après rupture de l'émulsion ne présente aucune cohésivité et de plus le temps de rupture de l'emulsion sur plaques d'enrobés est important dans chaque cas.

Exemples 3 à 5

Dans ces exemples on préparait des émulsions cationiques suivant l'invention à 70% d'un liant bitumineux du type bitume/polymère identique à celui décrit dans l'exemple 2.

La mise en émulsion du liant bitume/polymère était réalisée en utilisant le mode opératoire ci-après.

On formait tout d'abord une phase aqueuse consistant en un solution aqueuse du chlorhydrate de l'émulsifiant en réalisant une dispersion de l'émulsifiant dans le l'eau industrielle (exemple 3) ou dans l'eau de ville (exemples 4 et 5) et en ajoutant alors à la dispersion, comptés en pourcentages de la phase aqueuse, 0,13% d'acide chlorhydrique à 20°Bé puis 0.2% d'une solution aqueuse à 40% de sel dipotassique de l'acide N-(hydroxy-2 éthyl) glycine (exemples 3 et 4) ou de sel potassique de l'acide N,N-di (hydroxy-2 éthyl) glycine (exemple 5). L'émulsifiant utilisé consistait en un mélange de propylène-1,3 diamine de suif (agent émulsifiant de type A) et d'une polypropylène polyamine de suif commercialisée sous le nom LILAMULS EM30 (agent émulsifiant de type B) en quantités représentant respectivement, en pourcentages de la phase aqueuse, 0,015% et 0,135% dans les exemples 3 et 4 et 0,16% et 0,02% dans l'exemple 5. La phase aqueuse obtenue dans chaque cas était limpide.

L'émulsion était alors produite dans un émulseur dans lequel on introduisait, simultanément et séparément, 300 parties de la phase aqueuse préparée comme indiqué ci-dessus et portée à 45°C ainsi que 700 parties du liant bitume/polymère porté à 145°C.

Dans chaque exemple on obtenait 1000 parties d'émulsion cationique dont les caractéristiques sont données ci-après.

| Exemple: | 3 | 4 | 5 |
|---|---|---|---|
| pH | 5,5 | 5,3 | 5,1 |
| Diamètre moyen des globules de liant (µm): | 3—6 | 3—6 | 3—6 |
| Indice de rupture: | 60 | 60 | 65 |
| Quantité de liquide relargué après 1 heure (% de l'émulsion): | 8 | 6 | 6 |
| Quantité d'eau dans le liquide relargué (%): | 98 | 98 | 97 |
| Cohésivité de caillot: | Forte élasticité | Forte élasticité | Forte élasticité |
| Temps de rupture de l'émulsion sur plaques d'enrobés (mn): | 30—60 | 30—60 | 30—60 |

Pour les trois exemples la totalité du liant bitume/polymère est émulsionnée et la stabilité au stockage des émulsions produites est bonne.

Les indices de rupture des émulsions sont faibles et l'on retrouve un comportement des émulsions similaire à celui d'une émulsion de bitume ordinaire, à savoir faible quantité de phase liquide relarguée et peu d'émulsion non rompue.

En outre le caillot de sable et de liant bitume/polymère, obtenu au cours de l'essai de détermination de l'indice de rupture, présente une forte cohésivité-élasticité et peut être soumis à une caractérisation par essai de traction.

On donne ci-dessous les caractéristiques de traction du caillot résultant de la rupture de l'émulsion de l'exemple 3 au cours de l'essai de détermination de l'indice de rupture, l'essai de traction étant réalisé suivant la norme NF T 46 002 en opérant à 0°C avec une vitesse de traction de 500 mm/mn.

| | |
|---|---|
| Contrainte au seuil: | $2,6 \times 10^5$Pa |
| Contrainte à la rupture: | $0,71 \times 10^5$Pa |
| Allongement au séuil: | 14% |
| Allongement à la rupture: | 590% |

Exemple 6

On préparait une émulsion cationique d'un liant bitumineux du type bitume/polymère obtenu comme décrit dans l'exemple 2, en remplaçant toutefois la coupe pétrolière "Light Cycle Oil" par le même quantité d'une huile de houille anthracénique ayant un intervalle de distillation de l'ordre de 200 à 400°C.

La préparation de l'émulsion était effectué en opérant comme suit:

On formait tout d'abord une dispersion aqueuse d'émulsifiant en dispersant dans de l'eau industrielle un mélange d'agents émulsifiants azotés cationiques consistant en propylène amidoamine stéarique (agent émulsifiant de type A) et en une alcoylamidopolyamine commercialisée sous le nom EMULSAMINE L 60 (agent émulsifiant de type B), les dits agents émulsifiants étant utilisés en quantités représentant respectivement 0,02% et 0,15% de la dispersion aqueuse, puis on introduisait dans ladite dispersion, exprimés en pourcentages de cette dernière, 0,2% d'une solution aqueuse à 40% de sel potassique de l'acide N,N-di (hydroxy-2 éthyl) glycine et ensuite 0,25% d'une solution d'acide acétique à 96% (densité = 1,06). On obtenait une phase aqueuse limpide.

Dans un émulseur on introduisait, simultanement et séparément, 300 parties de la phase aqueuse préparée comme indiqué ci-dessus et portée à 45°C ainsi que 700 parties du liant bitume/polymère porté à 145°C.

On obtenait 1000 parties d'émulsion cationique dont les caractéristiques sont données ci-après.

| | |
|---|---|
| pH: | 5,3 |
| Diamètre moyen des globules de liant (µm): | 3—7 |
| Indice de rupture: | 60 |
| Quantité de liquide relargué après 1 heure (% de l'émulsion): | 7 |
| Quantité d'eau dans de liquide relargué (%): | 98 |
| Cohésivité du caillot: | forte élasticité |
| Temps de rupture de l'émulsion sur plaques d'enrobés (mn): | 30—60 |

La totalité du liant émulsionnée et la stabilité au stockage de l'émulsion produite est bonne.

L'indice de rupture de l'émulsion est faible et la rupture de l'émulsion s'accompagne du relargage d'une quantité réduite de liquide renfermant peu d'émulsion non rompue. En outre, le caillot de sable et de liant bitume/polymère, obtenu au cours de l'essai de détermination de l'indice de rupture, présente une forte cohésivité-élasticité.

Exemple 7

On préparait une émulsion cationique d'un liant bitumineux du type bitume/polymère obtenu par mélange d'un bitume routier de pénétration 80/100 avec un copolymère éthylène/acétate de vinyle renfermant 45% d'acétate de vinyle.

On préparait le liant en dispersant, par agitation et pendant environ 2 heures, 50 parties du copolymère dans 950 parties du bitume porté à 180°C, puis en fluidifiant la solution homogène obtenue par addition de 10% d'une huile de houille anthracénique ayant un intervalle de distillation de l'ordre de 200 à 300°C.

Les principales caractéristiques du liant obtenu sont indiquées ci-dessous:

| | |
|---|---|
| Viscosité à 160°C: | 97 mPa.s |
| Pseudo-viscosité à 50°C avec un orifice de 10 mm (NF T 66 005): | 128 secondes |
| Essai de traction à—10°C avec une vitesse de 500 mm/mn: | |
| Contrainte au seuil: | $12,3 \times 10^5$Pa |
| Contrainte à la rupture: | $6,3 \times 10^5$Pa |
| Allongement au seuil: | 15% |
| Allongement à la rupture: | 320% |

La mise en émulsion du liant était réalisée en suivant le mode opératoire décrit dans l'exemple 6.

On obtenait 1000 parties d'une émulsion cationique de liant bitume/polymère dont les caractéristiques sont données ci-après.

| | |
|---|---|
| pH: | 5,4 |
| Diamère moyen des globules de liant (µm): | 3—6 |
| Indice de rupture: | 62 |
| Quantité de liquide relargué après 1 heure (% de l'émulsion): | 7 |
| Quantité d'eau dans le liquide relargué (%): | 99 |
| Cohésivité du caillot: | Forte cohésivité |
| Temps de rupture de l'émulsion sur plaques d'enrobés (mn): | 30—60 |

La totalité du liant est émulsionnée durant la préparation de l'émulsion et la stabilité au stockage de l'émulsion produite est bonne.

L'indice de rupture de l'émulsion est faible et la rupture de l'émulsion s'accompagne du relargage d'une quantité réduite de liquide renfermant très peu d'émulsion non rompue. En outre le caillot de sable et de liant bitume/polymère, obtenu au cours de l'essai de détermination de l'indice de rupture, présente une forte cohésivité.

Exemple 8

On préparait deux émulsions cationiques d'un liant bitumineux du type bitume/polymère obtenu par mélange d'un bitume routier de pénétration 80/100 avec un copolymère triséquencé étoilé styrène/butadiène/styrène commercialisé sous le nom SOLPRENE 411 par la Société PHILLIPS PETROLEUM.

On préparait le liant en dispersant, par agitation et pendant 2 heures, trois parties du copolymère dans 100 parties du bitume porté à 180°C, puis en fluidifiant la solution homogène obtenue par addition de 12% d'une coupe pètrolière du type "Light Cycle Oil" ayant un intervalle de distillation entre 180°C et 360°C.

Les principales caractéristiques du liant obtenu sont données ci-dessous:

| | |
|---|---|
| Viscosité à 160°C: | 102 mPa.s |
| Pseudo-viscosité à 50°C avec un orifice de 10 mm (NF T 66005): | 132 secondes |
| Essai der traction à −10°C avec une vitesse de traction de 500 mm/mn | |
| Contrainte au seuil: | $7,1 \times 10^5$Pa |
| Contrainte à la rupture: | $0,05 \times 10^5$Pa |
| Allongement au seuil: | 20% |
| Allongement à la rupture: | 800% |

La mise en émulsion du liant bitume/polymère était réalisée en faisant appel soit au mode opératoire de l'exemple 6 suivant l'invention (essai 8.I) soit au mode opératoire de l'exemple 2 témoin (essai 8.II).

Dan chaque cas on obtenait 1000 parties d'une émulsion cationique du liant bitume/polymère dont les caractéristiques sont présentées ci-dessous:

| Essai: | 8.I | 8.II |
|---|---|---|
| pH: | 5,6 | 3,8 |
| Diamètre moyen des globules de liant (µm): | 4—7 | 3—6 |
| Indice de rupture: | 60 | 65 |
| Quantité de liquide relargué après 1 heure (% de l'émulsion): | 8 | 34 |
| Quantité d'eau dans le liquide relargué (%): | 96 | 34 |
| Cohésivité du caillot: | Forte élasticité | nulle |
| Temps de rupture de l'émulsion sur plaques d'enrobés (mn): | 30—60 | >180 |

Dans chacun des essais la totalité du liant est émulsionnée durant la préparation de l'émulsion et la stabilité au stockage de l'émulsion produite est bonne.

Pour l'émulsion de l'essai 8.I suivant l'invention l'indice de rupture de l'émulsion est faible et la rupture de l'émulsion s'accompagne du relargage d'une quantité réduite de liquide renfermant très peu d'émulsion non rompue. En outre le caillot de sable et de liant bitume/polymère, obtenu au cours de l'essai de détermination de l'indice de rupture, présente une forte élasticité.

Les caractéristiques de traction de ce caillot, obtenues par essai de traction suivant le norme NF T 46002 en opérant à 0°C avec une vitesse de traction de 500 mm/mn, sont les suivantes:

| | |
|---|---|
| Contrainte au seuil: | $3 \times 10^5$Pa |
| Contrainte à la rupture: | $0,3 \times 10^5$Pa |
| Allongement au seuil | 15% |
| Allongement à la rupture: | 170% |

Pour l'émulsion témoin de l'essai 8.II, l'indice de rupture a une valeur voisine de celle de l'émulsion de l'essai 8.I, copendant la rupture de l'émulsion s'accompagne du relargage d'une quantité importante de liquide renfermant une forte proportion d'émulsion non rompue. De plus le caillot de sable et de liant bitume/polymère, obtenu au cours de l'essai de détermination de l'indice de rupture, ne présente aucune cohésivité. Enfin le temps de rupture de l'émulsion sur plaques d'enrobés est très supérieur à celui mesuré pour l'émulsion de l'essai 8.I suivant l'invention.

Exemple 9

Un liant bitumineux du type bitume/polymère était préparé en mélangeant 80 parties d'un bitume routier de pénétration 80/100 porté à 180°C avec 20 parties d'une solution-mère vulcanisée formée à partir d'un solvant hydrocarboné, d'un copolymère séquencé de styrène et de butadiène et de soufre comme indiqué dans le brevet français N° 79 10987 (publication N° 2 445 633) du 2—05—1979.

Le liant bitume/polymère obtenu possédait les caractéristiques suivantes:

| | |
|---|---|
| Viscosité à 160°C: | 60 mPa.s |
| Pseudo-visosité à 50°C avec un orifice de 10 mm (NF T 66 005): | 78 secondes |
| Essai de traction à 0°C avec une vitesse de traction de 500 mm/mn: | |
| Contrainte au seuil: | $2,55 \times 10^5$Pa |
| Contrainte à la rupture: | $0,14 \times 10^5$Pa |
| Allongement à la seuil: | 15% |
| Allongement à la rupture: | >900% |

A partir du liant bitume/polymère ainsi obtenu on préparait deux émulsions cationiques en faisant appel soit au mode opératoire de l'exemple 6 (essai 9.I) soit au mode opératoire de l'exemple 2 témoin (essai 9.II).

Dans chaque cas on obtenait 1000 parties d'une émulsion cationique du liant bitumineux du type bitume/polymère dont les caractéristiques sont les suivantes:

| Essai: | 9.I | 9.II |
|---|---|---|
| pH: | 5,6 | 3,6 |
| Diamètre moyen des globules de liant (μm): | 3—6 | 3—6 |
| Indice de rupture: | 57 | 59 |
| Quantité de liquide relargué après 1 heure (% de l'émulsion): | 4 | 38 |
| Quantité d'eau dans le liquide relargué (%): | 96 | 34 |
| Cohésivité du caillot: | Bonne cohésivité | nulle |
| Temps de rupture de l'émulsion sur plaques d'enrobés (mn): | 30—60 | >180 |

Dans chacun des essais la totalité du liant est émulsionnée durant la préparation de l'émulsion et la stabilité au stockage de l'émulsion obtenue est bonne.

Pour l'émulsion de l'essai 9.I suivant l'invention l'indice de rupture de l'émulsion est faible et la rupture de l'émulsion s'accompagne du relargage d'une quantité réduite de liquide renfermant très peu d'émulsion non rompue. En outre le caillot de sable et de liant bitume/polymère, obtenu au cours de l'essai de détermination de l'indice de rupture, présente une bonne cohésivité.

Les caractéristiques de traction de ce caillot, obtenues par essai de traction suivant la norme NF T 46002 en opérant à 10°C avec une vitesse de traction de 500 mm/mn, sont les suivantes:

| | |
|---|---|
| Contrainte au seuil: | $3{,}5 \times 10^5$Pa |
| Contrainte à la rupture: | $0{,}28 \times 10^5$Pa |
| Allongement au seuil: | 10% |
| Allongement à la rupture: | 250% |

Pour l'émulsion témoin de l'essai 9.II, l'indice de rupture a une valeur comparable à celle pour l'émulsion de l'essai 9.I, cependent la rupture de l'émulsion s'accompagne du relargage d'une quantité importante de liquide renfermant une proportion substantielle d'émulsion non rompue. De plus le caillot de sable et de liant bitume/polymère, obtenu au cours de l'essai de détermination de l'indice de rupture, ne présente aucune cohésivité. Enfin le temps de rupture de l'émulsion sur plaques d'enrobés est très supérieur à celui mesuré pour l'émulsion de l'essai 9.I suivant l'invention.

## Exemple 10

A partir du liant bitume/polymère obtenu comme décrit dans l'exemple 2, on préparait une émulsion cationique suivant l'invention à 70% dudit liant en suivant le mode opératoire défini dans l'exemple 5 avec toutefois deux modifications, à savoir emploi, à titre d'émulsifiant, d'un mélange de chlorure de suif diméthyl benzyl ammonium, commercialisé sous le nom NORAMIUM S 75 par le Société CECA, et de polypropylène polyamine de suif (LILAMULS EM 30) en quantités respectives représentant 0,17% et 0,1% de la phase aqueuse, et utilisation d'une quantité d'acide chlorhydrique représentant seulement 0,1% de la phase aqueuse.

On obtenait 1000 parties d'émulsion cationique ayant les caractéristiques suivantes:

| | |
|---|---|
| pH: | 5,5 |
| Diamètre moyen des globules de liant (µm): | 3—6 |
| Indice de rupture: | 55 |
| Quantité de liquide relargué après 1 heure (% de l'émulsion): | 12 |
| Quantité d'eau dans le liquide relargué (%): | 95 |
| Cohésivité du caillot: | Forte élasticité |
| Temps de rupture de l'émulsion sur plaques d'enrobés (mn): | 30—60 |

La totalité du liant bitume/polymère était émulsionnée et la stabilité au stockage de l'émulsion produite est bonne.

L'indice de rupture de l'émulsion est faible et l'on retrouve un comportement de l'émulsion similaire à celui d'une émulsion de bitume ordinaire, à savoir faible quantité de phase liquide relarguée et peu d'émulsion non rompue.

En outre le caillot de sable et de liant bitume/polymère, obtenu au cours de l'essai de détermination de l'indice de rupture, présente une forte cohésivité-élasticité caractérisable par essai de traction.

## Exemple 11

A partir du liant bitume/polymère obtenu comme décrit dans l'exemple 2, oun préparait une émulsion cationique suivant l'invention à 70% dudit liant en opérant comme suit.

On formait tout d'abord un mélange de 45 parties de chlorure de suif diméthylbenzylammonium

(NORAMIUM S 75), 25 parties de polypropylène polyamine de suif (LILAMULS EM 30), 25 parties d'une solution aqueuse à 40% de sel potassique de l'acide N,N-di(hydroxy-2 éthyl) glycine et 67 parties d'une solution aqueuse à 30% d'un épaississant consistant en gomme arabique.

On préparait une phase aqueuse en incorporant 0,4 partie du mélange ainsi réalisé à 100 parties d'eau de ville et en ajoutant ensuite à la dispersion 0,1 partie d'acide chlorhydrique à 20°Bé.

L'émulsion était alors produite dans un émulseur dans lequel on introduisait, simultanément et séparément, 300 parties de la phase aqueuse préparée comme indiqué ci-dessus et portée à 45°C ainsi que 700 parties du liant bitume/polymère porté à 145°C.

L'émulsion cationique obtenue possédait des caractéristiques similaires à celles de l'émulsion cationique obtenue dans l'exemple 10 bien que sa viscosité fût plus élevée, à savoir supérieure à 110 $10^{-6} m^2/s$.

La totalité du liant bitume/polymère était émulsionnée et la stabilité au stockage de l'émulsion produite est bonne.

## Revendications

1. Emulsions cationiques de liants bitumineux du type bitume/polymère, qui sont formées d'une dispersion d'une phase organique consistant en le liant bitume/polymère dans une phase aqueuse renfermant un émulsifiant azoté cationique et un cide, ce dernier étant présent en quantité telle que le pH de la phase aqueuse ait un valeur comprise entre 3 et 9, et se caractérisent en ce que leur phase aqueuse renferme également un adjuvant consistant en au moins un sel hydrosoluble d'acide carboxylique azoté polyfunctionnel, qui possède, dans un intervalle de pH allant de 3 à 9, un pouvoir séquestrant vis à vis des ions métalliques équivalent à une fixation d'au moins 5 mg d'ions calcium par gramme de sel.

2. Emulsions suivant la revendication 1, caractérisées en ce que le ou sels d'acide carboxylique azoté polyfonctionnel constituant l'adjuvant répondent à la formule

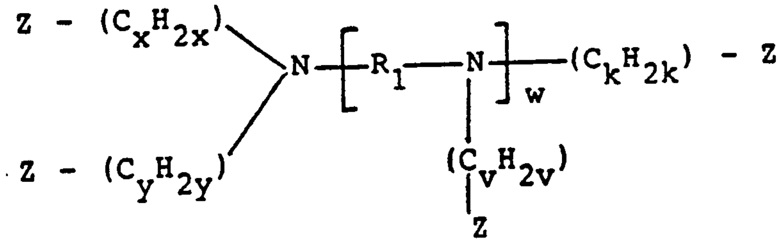

dans laquelle les Z, identiques ou différents, représentent un radical choisi parmi les radicaux —OH, —COOH et —COOM avec au moins un Z désignant un radical —COOM, les symboles x, y, v et k sont des nombres entiers, identiques ou différents, allant de 1 à 6, w est un nombre prenant les valeurs entières de 0 à 3, $R_1$ est un radical divalent hydrocarbylène en $C_1$ a $C_8$, éventuellement substitué par un ou plusieurs groupements fonctionnels et le symbole M, pouvant être différent d'un grope Z à l'autre, représente un atome de métal alcalin, un radical

$$-\overset{+}{N}H_3-NH_2$$

ou un radical de formule

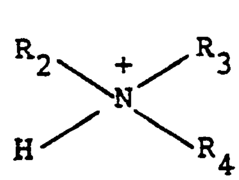

dans laquelle les symboles $R_2$ à $R_4$, identiques ou différents, représentent chacun un atome d'hydrogène ou un radical organique, renfermant éventuellement un ou plusieurs groupements fonctionnels, certains des radicaux $R_2$ à $R_4$ pouvant être réunis pour forme un hétérocycle avec l'atome d'azote auquel ils sont rattachés.

3. Emulsions suivant la revendication 7, caractérisées en ce les radicaux hydrocarbyles, éventuellement substitués par des groupements fonctionnels, que peuvent représenter les symboles $R_2$ à $R_4$ sont des radicaux alcoyles ou hydroxyalcoyles en $C_1$ à $C_8$, des radicaux cycloalcoyles en $C_4$ à $C_8$ ou des radicaux aromatiques en $C_6$ à $C_8$, certains des radicaux $R_2$ à $R_4$ peuvent former un hétérocycle aromatique ou alicyclique avec l'atome d'azote auquel ils sont rattachés.

4. Emulsions suivant la revendication 2 ou 3, caractérisées en ce que le ou les sels d'acide carboxylique azoté polyfonctionnel constituant l'adjuvant répondent aux formules:

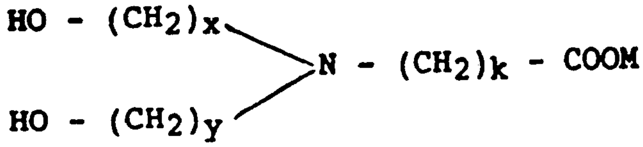

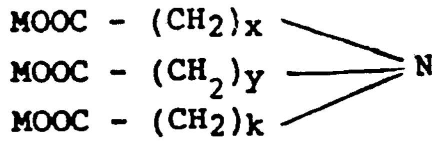

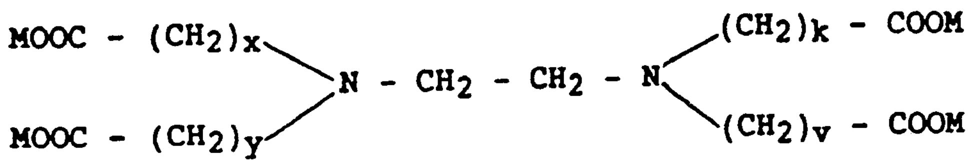

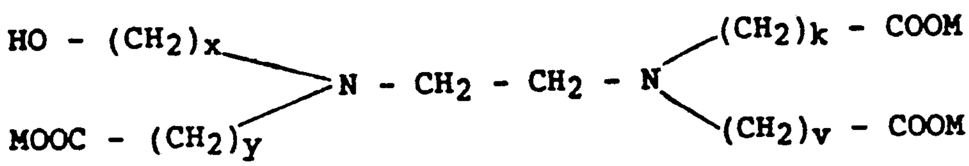

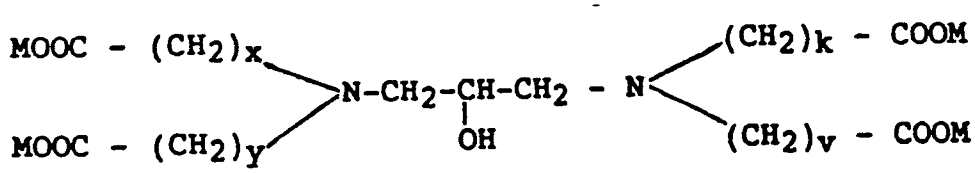

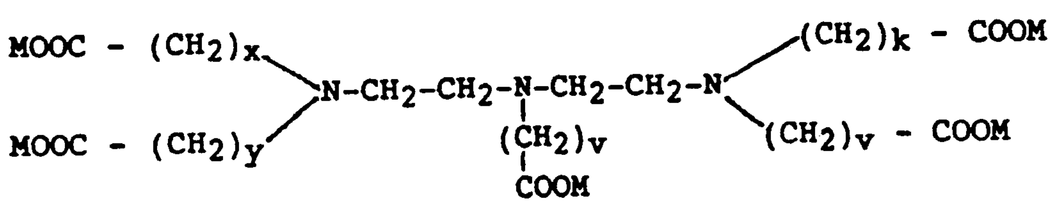

avec dans ces formules x, y, v et k désignant des nombres entiers, identiques ou différents, allant de 1 à 6, et M a la signification donnée dans la revendication 2.

5. Emulsions suivant l'une des revendications 1 à 4, caractérisées en ce que la concentration de l'adjuvant carboxylé dans la phase aqueuse de l'émulsion représente 0,005% à 0,5%.

6. Emulsions suivant l'une des revendications 1 à 5, caractérisées en ce que l'émulsifiant azoté cationique présent dans l'émulsion consiste en un ou plusieurs agents émulsifiants azotés cationiques du type des monoamines grasses, des polyamines, des amidoamines, des amidopolyamines, des sels ou oxydes desdites amines et amidoamines, et des produits de réaction de ces composés avec l'oxyde d'éthylène et/ou l'oxyde de propylène.

7. Emulsions suivant l'une des revendications 1 à 5, caractérisées en ce que l'émulsifiant azoté cationique présent dans l'émulsion consiste en un ou plusieurs agents émulsifiants azotés cationiques choisis parmi les monoamines grasses de formule $R_6—NH_2$, dans laquelle $R_6$ représente un radical hydrocarboné gras et les polyamines et amidopolyamines de formule:

$$R—X—(C_nH_{2n})—NH_2$$

dans laquelle X représente un reste divalent ayant la formule

$$-(CO)_r-NH\left[C_mH_{2m}-NH\right]_p$$ ou 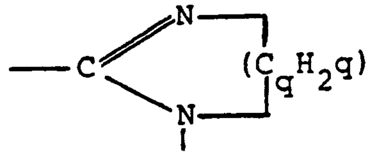 ,

R est un radical hydrocarbyle ayant jusqu'à 22 atomes de carbone et de carbone, m et n, identiques ou différents, sont des nombres entiers allant de 1 à 8, p est un nombre prenant des valeurs entières de 0 à 6, r est égal à 0 ou 1 et q est un nombre entier allant de 2 à 10.

8. Emulsions suivant l'une des revendications 1 à 5, caractérisées en ce que l'émulsifiant azoté cationique présent dans l'émulsion est formé par l'association d'un ou plusieurs agents émulsifiants A choisis parmi les agents émulsifiants azotés cationiques du type monoamines, diamines, amidoamines, oxydes de telles amines ou amidoamines, produits de réaction de tels composés avec l'oxyde de propylène et/ou l'oxyde d'éthylène et sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine.

9. Emulsions suivant revendication 8, caractérisées en ce que le rapport de la quantité pondérale globale du ou des composés A à la quantité pondérale totale des composés A et B va de 5% à 95%.

10. Emulsions suivant la revendication 8 ou 9, caractérisées en ce que les agents émulsifiants A sont choisi parmi:

les monoamines de formule $R_6—NH_2$,

les diamines et amidoamines de formule

$$R—(CO)_r—NH—(C_nH_{2n})—NH_2-$$

les amines de formule

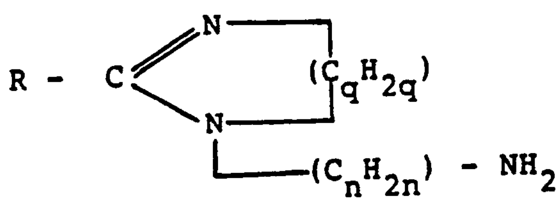

les composés d'ammonium quaternaire de formule

$$(R_7)_j\overset{+}{N}(R_8)_hY^-$$

tandis que les agents émulsifiants B sont choisis parmi les polyamines et les amidopolyamines de formule

$$R-(CO)r-NH\left[C_mH_{2m}-NH\right]_s(C_nH_{2n})-NH_2$$

avec dans ces formules R représentant un radical hydrocarbyle ayant jusqu'à 22 atomes de carbone, m et n, identiques ou différents, étant des nombres entiers allant de 1 à 8, r étant égal à 0 ou 1, q désignant un nombre entier allant de 2 à 10, s représentant un nombre entier allant de 1 à 6, les $R_7$, identiques ou différents, désignant de radicaux hydrocarbyles en $C_6$ à $C_{22}$ éventuellement substitués par un ou plusieurs groupements fonctionnels, les $R_8$, identiques ou différents, représentant des radicaux alcoyles ou hydroxyalcoyles en $C_1$ à $C_6$, $Y^-$ désignant un anion d'un acide minéral ou d'un acide organique, h étant un nombre égal à (4−j) et j représentant un nombre prenant les valeurs 1, 2 ou 3.

11. Emulsions suivant l'une des revendication 8 ou 9, caractérisées en ce que les agents émulsifiants A sont choisis parmi les composés de formules

$$R_9 - (CO)_r - NH - (CH_2)_3 - NH_2$$

$$R_9 - (CO)_r - \underset{\displaystyle R_{10}}{\underset{|}{CH}} - (CH_2)_2 - NH_2$$

$$(R_9)_g\ (C_6H_5CH_2)\ \overset{+}{N}\ (R_{10})_1\ Y_1^-$$

$$(R_9)_j\ \overset{+}{N}\ (R_{10})_h\ Y_1^-$$

dans lesquelles $R_9$ désigne un radical alcoyle ou alcényle en $C_{12}$ à $C_{22}$, $R_{10}$ représente un radical alcoyle ou hydroxyalcoyle en $C_1$ à $C_3$, $Y_1^-$ est un anion chlorure ou acétate, 1 est un nombre égal à (3−g), g est un nombre prenant les valeurs 1, 2 our 3, r est égal à 0 ou 1, h est un nombre égal à (4−j) et j désigne un nombre prenant les valeurs 1, 2 ou 3.

12. Emulsions suivant l'une des revendications 8 à 11, caractérisées en ce que les agents émulsifiants B sont choisis parmi les composés de formules

$$R_9 - \left[NH - (CH_2)_3\right]_f - NH_2$$

et

$$R_9 - CO - \left[NH - (CH_2)_3\right]_f - NH_2$$

dans lesquelles f désigne un nombre prenant les valeurs 2, 3, 4 ou 5 et $R_9$ représente un radical alcoyle ou alcényle en $C_{12}$ à $C_{22}$.

13. Emulsions suivant l'une des revendications 1 à 12, caractérisées en ce que la quantité totale d'émulsifiant azoté cationique dans l'émulsion représente 0,03% à 3%, en poids de l'émulsion.

14. Emulsions suivant l'une des revendications 1 à 13, caractérisées en ce que l'acide utilisé pour contrôler le pH de l'émulsion est un acide minéral ou un acide mono ou polycarboxylique saturé ou insaturé et éventuellement hydroyxlé.

15. Emulsions suivant l'une des revendications 1 à 14, caractérisées en ce que le liant bitume/polymère est choisi dans le groupe consistant en bitumes modifiés par des polymères oléfiniques ou par des mélanges d'acides gras et d'alcools supérieurs et éventuellement greffés par des élastomères, des bitumes modifiés par le norbornène, des bitumes modifiés par des dihalogénopolybutadiènes servant de structure d'accueil à des copolymères séquencés et à des élastomères covulcanisables, des bitumes modifiés par des copolymères blocs styrène/butadiène, styrène/isoprène ou styrène/diène carboxylé, bitumes modifiés par des cires de polyéthylène, bitumes modifiés par des polymères acryliques élastomères, bitumes modifiés par des polymères du type alcool polyvinylique, polyamide, polyester ou polyuréthanne, bitumes modifiés par des copolymères, d'olèfines ou d'oléfines et de monomères vinyliques, bitumes modifiés par des élastomères chlorès, bitumes modifiés par des polymères halogenés ou siliconés spéciaux, bitumes modifiés par l'emploi d'un mélange d'au moins deux polymères cités ci-dessus, compositions bitumineuses obtenues par mise en contact d'un bitumen avec une solution-mère contenant un polymère et du soufre ou un polysulfure ou encore un agent réactif ainsi qu'une coupe pétrolière et/ou une huile de houille, et des mélanges de tels bitumes modifiés.

16. Emulsions suivant l'une des revendications 1 à 15, caractérisées en ce qu'elles renferment encore dans leur phase aqueuse un agent épaississant consistant en un ou plusieurs composés organique hydrosolubles susceptibles, dans un domaine de pH allant de 3 à 9, d'augmenter la viscosité de l'émulsion sans modifier la vicosité de la phase aqueuse seule.

17. Emulsions suivant la revendication 16, caractérisées en ce que l'agent épaississant est une gomme naturelle hydrosoluble.

18. Emulsions suivant la revendication 16, caractérisées en ce que l'agent épaississant est une polyuréthanne hydrosoluble de faible masse moléculaire.

19. Emulsions suivant l'une des revendications 16 à 18, caractérisées en ce que la quantité pondérale d'agent épaississant dans l'émulsion représente 5 à 30% du poids total de l'ensemble formé par l'émulsifiant azoté cationique, l'adjuvant et l'épaississant.

20. Emulsions suivant la revendications 7, caractérisées en ce que dans les formules des agents émulsifiants chacun des radicaux $R_6$ et R est un radical alcoyle ou alcényle en $C_8$ à $C_{22}$.

21. Emulsions suivant la revendications 10, caractérisées en ce que dans les formules des agents émulsifiants le radical R est un radical alcoyle ou alcényle en $C_8$ à $C_{22}$ et le radical $R_7$ est un radical alcoyle ou alcényle en $C_8$ à $C_{22}$ ou un radical benzyle.

22. Emulsions suivant la revendications 15, caractérisées en ce que liant bitume polymère et une composition bitumineuse obtenue par mise en contact d'un bitume avec une solution-mère contenant un copolymère bloc styrène/diène conjugué et du soufre ou un polysulfure ainsi qu'une coupe pérolière et/ou huile de houille.

23. Emulsions suivant la revendication 18, caractérisées en ce que l'agent épaississant est un polyuréthanne, hydrosoluble de masse moléculaire inférieure à 20 000 qui résulte de la réaction d'un polyisocyanate avec un polyesterpolyol ou un polyétherpolyol.

24. Système émulsifiant cationique caractérisé en ce qu'il renferme un émulsifiant azoté cationique consistant en un ou plusieurs agents émulsifiants azotés cationiques et un adjuvant consistant en au moins un sel hydrosoluble d'acide carboxylique azoté polyfonctionnel, ou en l'acide précurseur dudit sel, ce sel possédant, dans un intervalle de pH allant de 3 à 9, un pouvoir séquestrant vis à vis des ions métalliques équivalent à une fixation d'au moins 5 mg d'ions calcium par gramme de sel et répondant à la formule

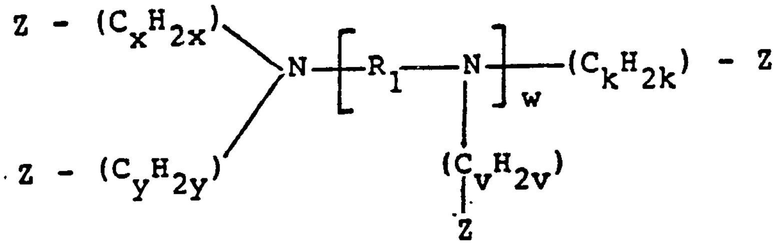

dans laquelle les Z, identiques ou différents, représentent un radical choisi parmi les radicaux —OH, —COOH et —COOM avec au moins un Z désignant un radical —COOM, les symboles x, y, v et k sont des nombres entiers, identiques ou différents, allant de 1 à 6, w est un nombre prenant les valeurs entières de 0 à 3, $R_1$ est un radical divalent hydrocarbylène en $C_1$ à $C_8$, éventuellement substitué par un ou plusieurs groupements fonctionnels, et le symbole M, pouvant être différent d'un groupe Z à l'autre, représente un atome de métal alcalin, un radical $—N^+H_3—NH_2$ ou un radical de formule

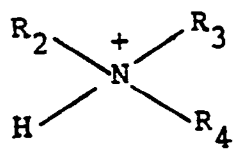

dans laquelle les symboles $R_2$ à $R_4$, identiques ou différents, représentent chacun un atome d'hydrogène ou un radical organique, renfermant éventuellement un ou plusieurs groupements fonctionnels, certains des radicaux $R_2$ à $R_4$ pouvant être réunis pour former un hétérocycle avec l'atome d'azote auquel ils sont rattachés.

25. Système émulsifiant suivant la revendication 24, caractérisé en ce que les radicaux, éventuellement substitués par des groupements fonctionnels, que peuvent représenter les symboles $R_2$ à $R_4$ sont des radicaux alcoyles ou hydroxyalcoyles en $C_1$ à $C_8$, des radicaux cycloalcoyles en $C_4$ à $C_8$ ou des radicaux aromatiques en $C_6$ à $C_8$, certains des radicaux $R_2$ à $R_4$ pouvant former un hétérocycle aromatique ou alicyclique avec l'atome d'azote auquel ils sont rattachés.

26. Système émulsifiant suivant la revendication 24 ou 25, caractérisé en ce que le ou les sels d'acide carboxylique azoté polyfonctionnel constituant l'adjuvant répondent aux formules

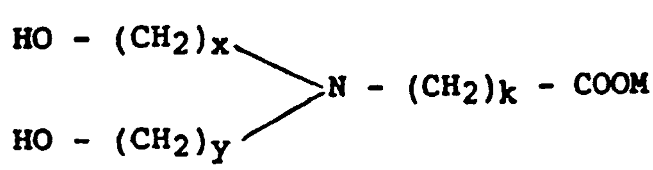

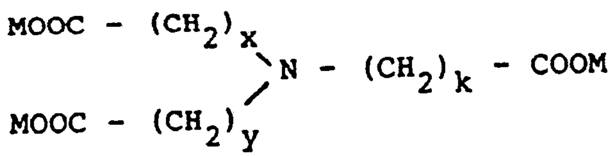

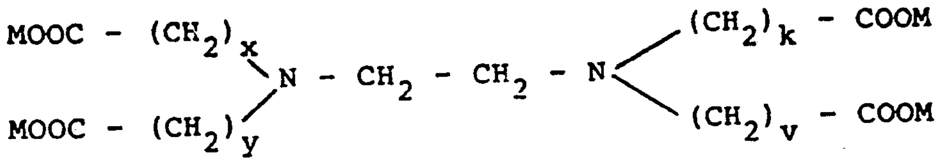

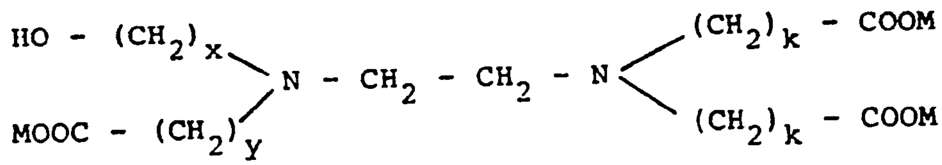

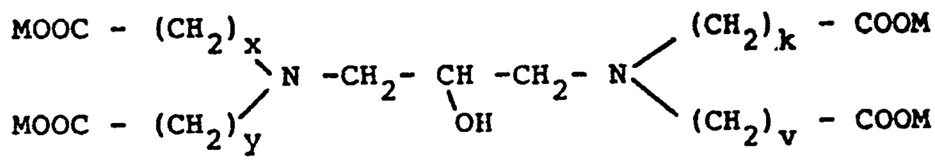

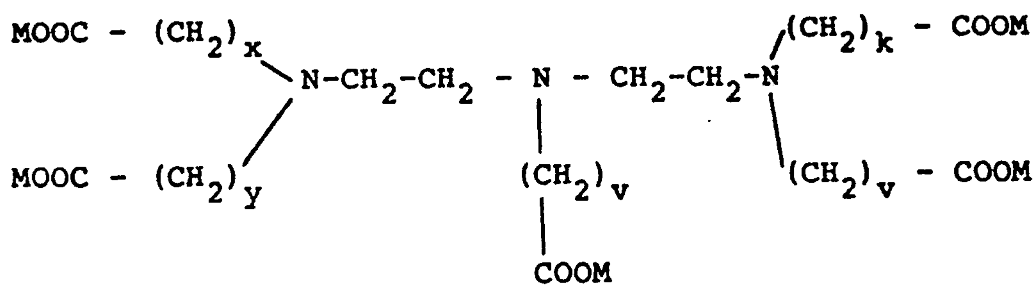

avec dans ces formules x, y, v et k désignant des nombres entiers, identiques ou différents, allant de 1 à 6 et M a la signification donnée dans la revendication 24.

27. Système émulsifiant suivant l'une des revendications 24 à 26, caractérisé en ce que la quantité pondérale de l'émulsifiant azoté cationique représente 10 à 99% de la quantité pondérale totale d'émulsifiant et d'adjuvant.

28. Système émulsifiant suivant l'une des revendications 24 à 27, caractérisé en ce que l'émulsifiant azoté cationique consiste en un ou plusieurs agents émulsifiants azotés cationiques du type des monoamines grasses, des polyamines, des amidoamines, des amidopolyamines, des sels ou oxydes desdites amines et amidoamines, et des produits de réaction de ces composés avec l'oxyde d'éthylène et/ou de propylène.

29. Système émulsifiant suivant l'une des revendications 24 à 28, caractérisé en ce que l'émulsifiant azoté cationique consiste en un ou plusieurs agents émulsifiants azotés cationiques choisis parmi les monoamines grasses de formule $R_6—NH_2$, dans laquelle $R_6$ représente un radical hydrocarboné gras et les polyamines et amidopolyamines de formule

$$R—X—(C_nH_{2n})—NH_2$$

dans laquelle X représente un reste divalent de formule

$$-(CO)_r-NH\left[C_mH_{2m}-NH\right]_p-$$

ou

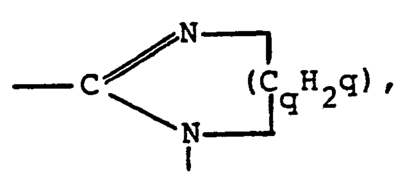

,

R est un radical hydrocarbyle ayant jusqu'à 22 atomes de carbone, m et n, identiques ou différents, sont des nombres entiers allant de 1 à 8, p est n nombre prenant des valeurs entières de 0 à 6, r est égal à 0 ou 1 et q est un nombre entier allant de 2 à 10.

30. Système émulsifiant suivant l'une des revendications 24 à 27, caractérisé en ce que l'émulsifiant azoté cationique est formé par l'association d'un ou plusieurs agents émulsifiants A choisis parmi les agents émulsifiants azotés cationiques du type monoamines, diamines, amidoamines, oxydes des telles amines ou amidoamines, produits de réaction de tels composés avec l'oxyde d'éthylène et/ou de propylène et sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine.

31. Système émulsifiant suivant la revendication 30, caractérisé émulsifiant en ce que le rapport de la quantité pondérale globale du ou des composés A à la quantité pondérale totale des composés A et B va de 5% à 95%.

32. Système émulsifiant suivant la revendication 30 ou 31, caractérisé en ce que les agents émulsifiants A sont choisis parmi

les monoamines de formule $R_6NH_2$,

les diamines et amidoamines de formule

$$R—(CO)_r—NH—(C_nH_{2n})—NH_2$$

les amines de formule

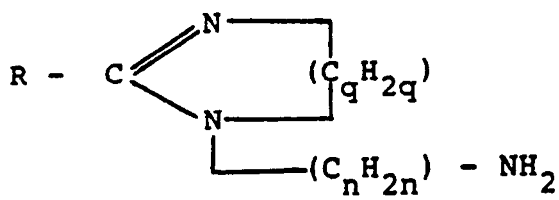

les composés d'ammonium quaternaire de formule

$$(R_7)_j^+N(R_8)_hY^-$$

tandis que les agents émulsifiants B sont choisis parmi les polyamines et les amidopolyamines de formule

$$R-(CO)r-NH-\left[C_mH_{2m}-NH\right]_s-(C_nH_{2n})-NH_2$$

avec dans ces formules R représentant un radical hydrocarbyle ayant jusqu'à 22 atomes de carbone, m et n, identiques ou différents, étant des nombres entiers allant de 1 à 8, r étant égal à 0 ou 1, q désignant un nombre entier allant de 2 à 10, s représentant un nombre entier allant de 1 à 6, les $R_7$, identiques ou différents, désignant des radicaux hydrocarbyles en $C_6$ à $C_{22}$, éventuellement substitués par un ou plusieurs groupements fonctionnels, les $R_8$, identiques ou différents, représentant des radicaux alcoyles ou hydroxyalcoyles en $C_1$ à $C_6$, $Y^-$ désignant un anion d'un acide minéral ou d'un acide organique, h étant un nombre égal à (4—j) et j représentant un nombre prenant les valeurs 1, 2 ou 3.

33. Système émulsifiant suivant la revendication 30 ou 31, caractérisé en ce que les agents émulsifiants A sont choisis parmi les composés de formules

$$R_9-(CO)_r-NH-(CH_2)_3-NH_2$$

$$R_9-(CO)_r-\underset{\displaystyle R_{10}}{\underset{|}{CH}}-(CH_2)_2-NH_2$$

$$(R_9)_g\ (C_6H_5CH_2)\ \overset{+}{N}\ (R_{10})_1\ Y_1^-$$

$$(R_9)_j \overset{+}{N} (R_{10})_h Y_1^-$$

dans lesquelles $R_9$ désigne un radical alcoyle ou alcényle en $C_{12}$ à $C_{22}$, $R_{10}$ représente un radical alcoyle ou hydroxyalcoyle en $C_1$ à $C_3$, $Y_1^-$ est un anion chlorure ou acétate, 1 est un nombre égal à (3—g), g est un nombre prenant les valeurs 1, 2 ou 3, r est égal à 0 ou 1, h est un nombre égal à (4—j) et j désigne un nombre prenant les valeurs 1, 2 ou 3.

34. Système émulsifiant suivant l'une des revendications 30 à 33, caractérisé en ce que les agents émulsifiants B sont choisis parmi les composés de formules

$$R_9 - \left[ NH - (CH_2)_3 \right]_f - NH_2 \quad \text{et}$$

$$R_9 - CO - \left[ NH - (CH_2)_3 \right]_f - NH_2$$

dans lequelles f désigne un nombre prenant les valeurs 2, 3, 4 ou 5 et $R_9$ représente un radical alcoyle ou alcényle en $C_{12}$ à $C_{22}$.

35. Système émulsifiant suivant l'une des revendications 24 à 34, caractérisé en ce qu'il renferme également un agent épaississant consistant en un ou plusieurs composés organiques hydrosolubles susceptibles, dans un domaine de pH allant de 3 à 9, d'augmenter la viscosité d'une émulsion cationique de liant bitume/polymère sans modifier la viscosité de la phase aqueuse seule de ladite émulsion.

36. Système émulsifiant suivant la revendication 35, caractérisé en ce que l'agent épaississant est une gomme naturelle hydrosoluble.

37. Système émulsifiant suivant la revendication 35, caractérisé en ce que l'agent épaississant est un polyuréthanne hydrosoluble de faible masse moléculaire.

38. Système émulsifiant suivant l'une des revendications 35 à 37, caractérisé en ce que la quantité pondérale d'agent épaississant représente 5 à 30% du poids total de l'ensemble formé par l'émulsifiant azoté cationique, l'adjuvant carboxylé et l'épaississant.

39. Système émulsifiant suivant la revendication 27, caractérisé en ce que la quantité pondérale de l'émulsifiant azoté cationique représente 25 à 90% de la quantité pondérale totale d'émulsifiant et d'adjuvant.

40. Système émulsifiant suivant la revendication 29, caractérisé en ce que dans les formules des agents émulsifiants chacun des radicaux $R_6$ et R est un radical alcoyle ou alcényle en $C_8$ à $C_{22}$.

41. Système émulsifiant suivant la revendication 32, caractérisé en ce que dans les formule des agents émulsifiants le radical R est un radical alcoyle ou alcényle en $C_8$ à $C_{22}$ et le radical $R_7$ est un radical alcoyle ou alcényle en $C_8$ à $C_{22}$ ou un radical benzyle.

42. Système émulsifiant suivant la revendication 37, caractérisé en ce que l'agent épaississant est un polyuréthanne hydrosoluble de masse moléculaire inférieure à 20 000 qui résulte de la réaction d'un polyisocyanate avec un polyesterpolyol ou un polyétherpolyol.

43. Application du système émulsifiant suivant l'une des revendications 24 à 42 à la préparation d'émulsions cationiques de liants bitumineux du type bitume/polymère suivant l'une des revendications 1 à 23.

## Patentansprüche

1. Kationische Emulsionen von bituminösen Bindemitteln vom Typ Bitumen/Polymer, die aus einer Dispersion einer organischen Phase, die in dem Bindemittel Bitumen/Polymer besteht, in einer wässerigen Phase, die einen kationischen stickstoffhaltigen Emulgator und eine Säure umfaßt, gebildet sind, wobei letztere in einer solchen Menge vorliegt, daß der pH der wässerigen Phase einen Wert zwischen 3 und 9 aufweist, dadurch gekennzeichnet, daß ihre wässerige Phase außerdem noch einen Zusatz enthält, der zumindest aus einem wasserlöslichen Salz einer polyfunktionellen stickstoffhaltigen Carbonsäure besteht, das in einem pH-Bereich von 3 bis 9 ein Sequestrierungsvermögen gegenüber Metallionen aufweist, das einer Fixierung von wenigstens 5 mg Calciumionen pro g Salz entspricht.

2. Emulsionen nach Anspruch 1, dadurch gekennzeichnet, daß das bzw. die den Zusatz bildende bzw. die bildenden polyfunktionelle(n) stickstoffhaltige(n) Carbonsäuresalz(e) der Formel

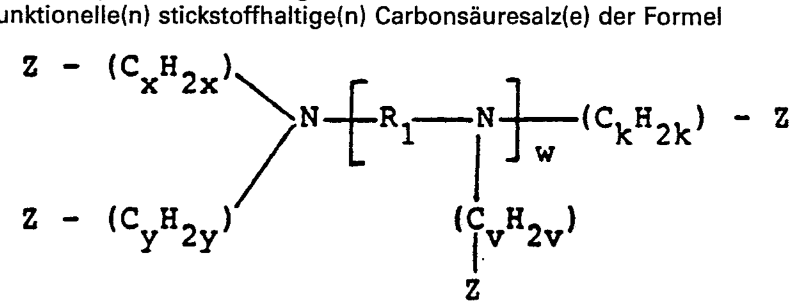

entsprechen, worin die Reste Z gleich oder verschieden sind und einen rest darstellen, ausgewählt unter den Resten —OH, —COOH und —COOM, wobei wenigstens ein Rest Z einen Rest —COOM bedeutet, die Symbole x, y, v und k ganze gleiche oder verschiedene Zahlen von 1 bis 6 sind, w eine ganze Zahl von 0 bis 3 bedeutet, $R_1$ einen zweiwertigen $C_1$—$C_8$-Kohlenwasserstoffrest bedeutet, der gegebenenfalls durch eine oder mehrere funktionelle Gruppierungen substituiert ist, und das Symbol M, das von einer Gruppe Z zur anderen verschieden sein kann, ein Alkalimetallatom, einen Rest

$—N^+H_3—NH_2$ oder einen Rest der Formel 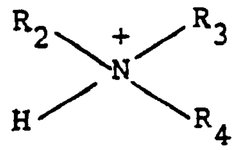

darstellt, worin die Symbole $R_2$ bis $R_4$ gleich oder verschieden sind und jeweils ein Wasserstoffatom oder einen organischen Rest darstellen, der gegebenenfalls eine oder mehrere funktionelle Gruppierungen umfaßt, wobei gewisse Reste $R_2$ bis $R_4$ zur Bildung eines Heterocyclus mit dem Stickstoffatom, mit dem sie verknüpft sind, vereinigt sein können.

3. Emulsionen nach Anspruch 2, dadurch gekennzeichnet, daß die Kohlenwasserstoffreste, die gegebenenfalls durch funktionelle Gruppierungen substituiert sein können, welche die Symbole $R_2$ bis $R_4$ darstellen können, $C_{1-8}$-Alkyl- oder -Hydroxyalkylreste, $C_{4-8}$-Cycloalkyl- oder aromatische $C_{6-8}$-Reste sind, wobei bestimmte Reste $R_2$ bis $R_4$ mit dem N-Atom, mit dem sie verknüpft sind, einen aromatischen oder alicyclischen Heterocyclus bilden können.

4. Emulsionen nach Anspruch 2 oder 3, dadurch gekennzeichnet, daß das bzw. die polyfunktionelle(n) stickstoffhaltige(n) Carbonsäuresalze(e), das bzw. die den Zusatz bilden, den Formeln

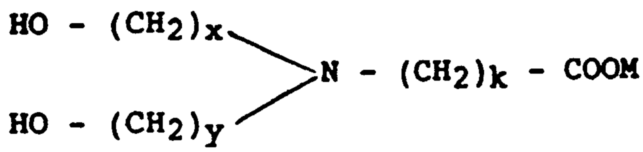

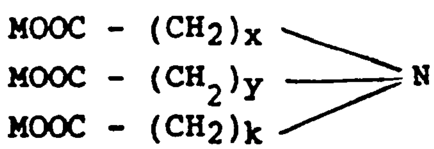

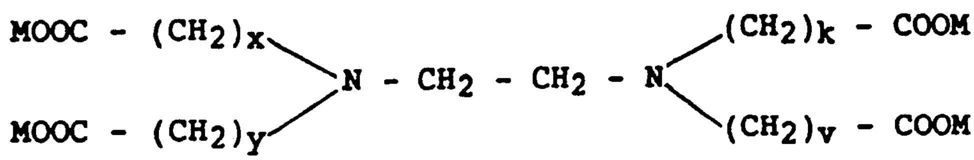

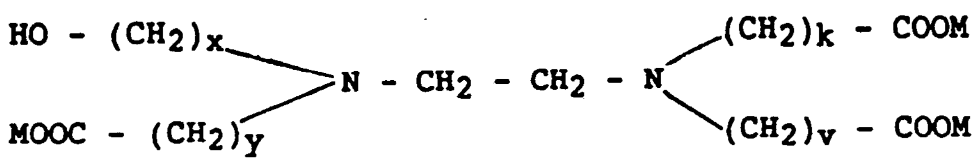

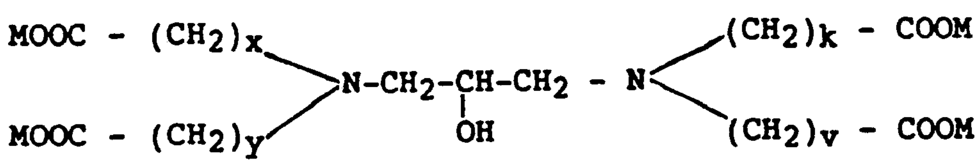

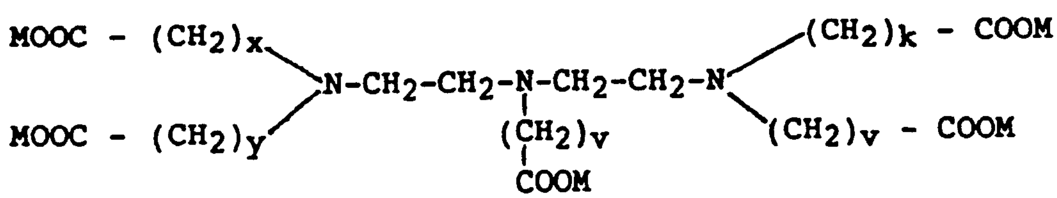

entspricht bzw. entsprechen, wobei in diesen Formeln x, y, v und k gleiche oder verschiedene ganze Zahlen von 1 bis 6 bezeichnen und M die in Anspruch 2 angegebene Bedeutung hat.

5. Emulsionen nach einem der Ansprüche 1 bis 4, dadurch gekennzeichnet, daß die Konzentration des carboxylierten Zusatzes in der wässerigen Phase der Emulsion 0,005% bis 0,5% beträgt.

6. Emulsionen nach einem der Ansprüche 1 bis 5, dadurch gekennzeichnet, daß der kationische stickstoffhaltige Emulgator in der Emulsion aus einem oder mehreren kationischen stickstoffhaltigen Emulgatoren vom Typ der Fettmonoamine, der Polyamine, der Amidoamine, der Amidopolyamine, der Salze oder Oxide dieser Amine und Amidoamine und der Umsetzungsprodukte dieser Verbindungen mit Ethylenoxid und/oder Propylenoxid besteht.

7. Emulsionen nach einem der Ansprüche 1 bis 5, dadurch gekennzeichnet, daß der kationische stickstoffhaltige Emulgator in der Emulsion aus einem oder mehreren kationischen stickstoffhaltigen Emulgatoren besteht, ausgewählt unter den Fettmonoaminen der Formel $R_6$—$NH_2$, worin $R_6$ einen Fettkohlenwasserstoffrest darstellt, und den Polyaminen und Amidopolyaminen der Formel

$$R—X—(C_nH_{2n})—NH_2$$

worin X einen zweiwertigen Rest der Formel

$$-(CO)_r-NH\left[C_mH_{2m}-NH\right]_p$$

oder 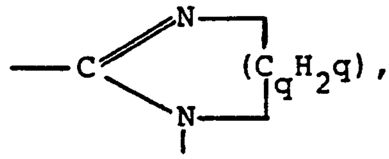

darstellt, R ein Kohlenwasserstoffrest mit bis zu 22 C-Atomen ist, m und n gleich oder verschieden sind und ganze Zahlen von 1 bis 8 bedeuten, p eine ganze Zahl von 0 bis 6 bedeutet, r 0 oder 1 ist und q eine ganze Zahl von 2 bis 10 bedeutet.

8. Emulsionen nach einem der Ansprüche 1 bis 5, dadurch gekennzeichnet, daß der kationische stickstoffhaltige Emulgator in der Emulsion gebildet wurde durch Vereinigung eines oder mehrerer Emulgatoren A, ausgewählt unter den kationischen stickstoffhaltigen Emulgatoren vom Typ Monoamine, Diamine, Amidoamine, Oxide dieser Amine oder Amidoamine, Umsetzungsprodukte derartiger Verbindungen mit Propylen- und/oder Ethylenoxid und quaternäre Ammoniumsalze, mit einem oder mehreren Emulgatoren B, ausgewählt unter den kationischen stickstoffhaltigen Emulgatoren, die in ihrem Molekül wenigstens 3 funktionnelle Gruppierungen aufweisen, ausgewählt unter den Amin- und Amidgruppierungen auf solche Weise, daß wenigstens eine der genannten funktionellen Gruppierungen eine Amingruppierung ist.

9. Emulsionen nach Anspruch 8, dadurch gekennzeichnet, daß das Gesamtgewichtsverhältnis der Verbindung bzw. Verbindungen A zum Gesamtgewichtsverhältnis der Verbindungen A und B 5 bis 95% beträgt.

10. Emulsionen nach Anspruch 8 oder 9, dadurch gekennzeichnet, daß die Emulgatoren A ausgewählt sind unter den Monoaminen der Formel $R_6$—$NH_2$, den Diaminen und Amidoaminen der Formel

$$R—(CO)_r—NH—(C_nH_{2n})—NH_2,$$

den Aminen der Formel

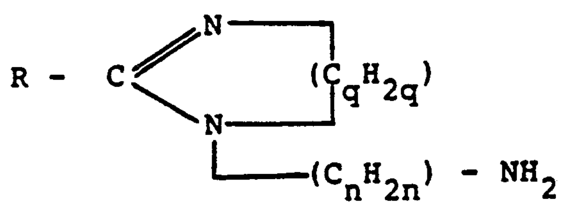

und den quaternären Ammoniumverbindungen der Formel

$$(R_7)_jN^+(R_8)_hY^-$$

während die Emulgatoren B ausgewählt sind unter den Polyaminen und Aminopolyaminen der Formel

$$R-(CO)r-NH\left[C_mH_{2m}-NH\right]_s-(C_nH_{2n})-NH_2$$

wobei in diesen Formeln R einen Kohlenwasserstoffrest mit bis zu 22 C-Atomen darstellt, m und n gleich oder verschieden sind und ganze Zahlen von 1 bis 8 bedeuten, r 0 oder 1 ist, q eine ganze Zahl von 2 bis 10

bezeichnet, s eine ganze Zahl von 1 bis 6 darstellt, die Reste $R_7$ gleich oder verschieden sind und $C_{6-22}$-Kohlenwasserstoffreste bedeuten, die gegebenenfalls durch eine oder mehrere funktionelle Gruppierungen substituiert sind, die Reste $R_8$ gleich oder verschieden sind und $C_{1-6}$-Alkyl oder -Hydroxyalkylreste darstellen, $Y^-$ das Anion einer Mineral- oder organischen Säure darstellt, h eine Zahl gleich (4—j) und j eine Zahl mit den Werten 1, 2 oder 3 bedeuten.

11. Emulsionen nach Anspruch 8 oder 9, dadurch gekennzeichnet, daß die Emulgatoren A ausgewählt sind unter den Verbindungen der Formeln

$$R_9 - (CO)_r - NH - (CH_2)_3 - NH_2$$

$$R_9 - (CO)_r - \underset{\displaystyle R_{10}}{\underset{|}{CH}} - (CH_2)_2 - NH_2$$

$$(R_9)_g\ (C_6H_5CH_2)\ \overset{+}{N}\ (R_{10})_1\ Y_1^-$$

$$(R_9)_j\ \overset{+}{N}\ (R_{10})_h\ Y_1^-$$

worin $R_9$ einen $C_{12-22}$-Alkyl- oder -Alkenylrest, $R_{10}$ einen $C_{1-3}$-Alkyl- oder -Hydroxyalkylrest, $Y_1^-$ ein Chlorid- oder Acetatanion bedeuten, 1 eine Zahl gleich (3—g) bedeutet, g eine Zahl mit den Werten 1, 2 oder 3 bedeutet, r gleich 0 oder 1 ist, h eine Zahl gleich (4—j) ist und j eine Zahl mit den Werten 1, 2 oder 3 bezeichnet.

12. Emulsionen nach einem der Ansprüche 8 bis 11, dadurch gekennzeichnet, daß die Emulgatoren B ausgewählt sind unter den Verbindungen der Formeln

$$R_9 \left[ NH - (CH_2)_3 \right]_f NH_2$$

und

$$R_9 - CO \left[ NH - (CH_2)_3 \right]_f NH_2$$

worin f eine Zahl mit den Werten 2, 3, 4 oder 5 bedeutet und $R_9$ einen $C_{12-22}$-Alkyl- oder -Alkenylrest darstellt.

13. Emulsionen nach einem der Ansprüche 1 bis 12, dadurch gekennzeichnet, daß die Gesamtmenge an kationischem stickstoffhaltigem Emulgator in der Emulsion 0,03 bis 3%, bezogen auf das Gewicht der Emulsion, ausmacht.

14. Emulsionen nach einem der Ansprüche 1 bis 13, dadurch gekennzeichnet, daß die für die Einstellung des pH der Emulsion verwendete Säure eine Mineralsäure oder eine gegebenenfalls hydroxylierte gesättigte oder ungesättigte Mono- oder Polycarbonsäure ist.

15. Emulsionen nach einem der Ansprüche 1 bis 14, dadurch gekennzeichnet, daß das Bindemittel Bitumen/Polymer ausgewählt ist aus der Gruppe, bestehend aus durch olefinische Polymere oder Gemische aus Fettsäuren und höheren Alkoholen modifizierten und gegebenenfalls mit Elastomeren aufgepfropften Bitumina, durch Norbornen modifizierten Bitumina, durch Dihalogenpolybutadiene, die als Aufnahmestruktur für sequenzierte Copolymerisate und covulkanisierbare Elastomere dienen, modifizierte Bitumina, durch Styrol-Butadien-, Styrol-Isopren- oder Styrol-carboxyliertes Dien-Blockcopolymerisate modifizierte Bitumina, durch Polyethylenwachse modifizierte Bitumina, durch elastomere Acrylpolymerisate modifizierte Bitumina, durch Polymerisate vom Typ Polyvinylalkohol, Polyamid, Polyester oder Polyurethan modifizierte Bitumina, durch Copolymerisate von Olefinen oder von Olefinen und Vinylmonomeren modifizierte Bitumina, durch chlorierte Elastomeren modifizierte Bitumina, durch spezielle Halogen- oder Siliciumpolymere modifizierte Bitumina, durch die Verwendung wenigstens zweier der oben erwähnten Polymerisate modifizierte Bitumina, bituminöse Gemische, erhalten durch Kontaktierung eines Bitumens mit einer Mutterlauge, die ein Polymer und Schwefel oder ein Polysulfid oder auch eine Reagens sowie eine Erdölfraktion und/oder ein Steinkohlenöl enthält, und Gemischen dieser modifizierten Bitumina.

16. Emulsionen nach einem der Ansprüche 1 bis 15, dadurch gekennzeichnet, daß sie außerdem noch in ihrer wässerigen Phase einen Verdicker enthalten, der aus einer oder mehreren wasserlöslichen organischen Verbindungen besteht, die in einem pH-Bereich von 3 bis 9 die Viskosität der Emulsion ohne Abänderung der Viskosität der wässerigen Phase alleine zu steigern vermögen.

17. Emulsionen nach Anspruch 16, dadurch gekennzeichnet, daß der Verdicker ein wasserlöslicher Naturgummi ist.

18. Emulsionen nach Anspruch 16, dadurch gekennzeichnet, daß der Verdicker ein wasserlösliches Polyurethan von geringer Molekularmasse ist.

19. Emulsionen nach einem der Ansprüche 16 bis 18, dadurch gekennzeichnet, daß der Gewichtsanteil an Verdicker in der Emulsion 5 bis 30% des Gesamtgewichtes der Gesamtheit aus kationischem stickstoffhaltigem Emulgator, Zusator und Verdicker ausmacht.

20. Emulsionen nach Anspruch 7, dadurch gekennzeichnet, daß in den Formeln der Emulgatoren jeder der Reste $R_6$ und R ein $C_{8-22}$-Alkyl- oder -Alkenylrest ist.

21. Emulsionen nach Anspruch 10, dadurch gekennzeichnet, daß in den Formeln der Emulgatoren der Rest R ein $C_{8-22}$-Alkyl- oder -Alkenylrest ist und der $Rest_7$ ein $C_{8-22}$-Alkyl- oder -Alkenylrest oder ein Benzylrest ist.

22. Emulsionen nach Anspruch 15, dadurch gekennzeichnet, daß das Bitumen-Polymer-Bindemittel ein bituminöses Gemisch ist, erhalten durch Kontaktierung eines Bitumens mit einer Mutterlauge, die ein konjugiertes Styrol-Dien-Blockcopolymerisat und Schwefel oder ein Polysulfid sowie eine Erdölfraktion und/oder ein Steinkohlenöl enthält.

23. Emulsionen nach Anspruch 18, dadurch gekennzeichnet, daß der Verdicker ein wasserlösliches Polyurethan mit einer Molekularmasse von unter 20.000 ist, daß das Produkt der Umsetzung eines Polyisocyanats mit einem Polyesterpolyol oder einem Polyetherpolyol darstellt.

24. Kationisches Emulgatorsystem, dadurch gekennzeichnet, daß es einen kationischen stickstoffhaltigen Emulgator umfaßt, der aus einem oder mehreren kationischen stickstoffhaltigen Emulgatoren und einem Zusatz besteht, der seinerseits zumindest aus einem wasserlöslichen Salz einer polyfunktionellen stickstoffhaltigen, Carbonsäure oder der Precursersäure dieses Salzes besteht, wobei dieses Salz einen pH-Bereich von 3 bis 9, ein Sequestrierungsvermögen gegenüber Metallionen aufweist, das einer Fixierung von wenigstens 5 mg Calciumionen pro g Salz entspricht, und der Formel

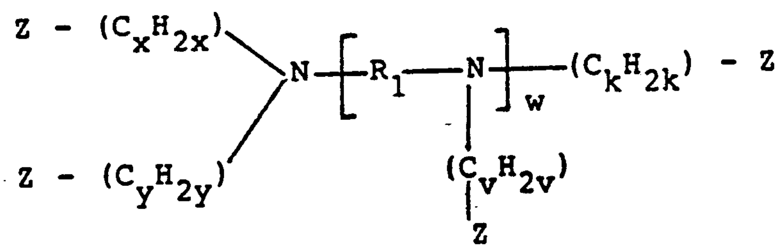

entspricht, worin die Reste Z gleich oder verschieden sind und einen Rest darstellen, ausgewähalt unter den Resten —OH, —COOH und —COOM, wobei wenigstens ein Rest Z einen Rest —COOM bedeutet, die Symbole x, y, v und k ganze gleiche oder verschiedene Zahlen von 1 bis 6 sind, w eine ganze Zahl von 0 bis 3 bedeutet, $R_1$ einen zweiwertigen $C_{1-8}$-Kohlenwasserstoffrest bedeutet, der gegebenenfalls durch eine oder mehrere funktionelle Gruppierungen substituiert ist, und das Symbol M, das von einer Gruppe Z zur anderen verschieden sein kann, ein Alkalimetallatom, einen Rest $—N^+H_3—NH_2$ oder einen Rest der Formel

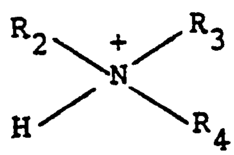

darstellt, worin die Reste $R_2$ bis $R_4$ gleich oder verschieden sind und jeweils ein Wasserstoffatom oder einen organischen Rest darstellen, der gegebenenfalls eine oder mehrere funktionelle Gruppierungen umfaßt, wobei gewisse Reste $R_2$ bis $R_4$ zur Bildung eines Heterocyclus mit dem Stickstoffatom, mit dem sie verknüpft sind, vereinigt sein können.

25. Emulgatorsystem nach Anspruch 24, dadurch gekennzeichnet, daß die Kohlenwasserstoffreste, die gegebenenfalls durch funktionelle Gruppierungen substituiert sein können, welche die Symbole $R_2$ bis $R_4$ darstellen können, $C_{1-8}$-Alkyl- oder Hydroxyalkylreste, $C_{4-8}$-Cycloalkyl- oder aromatische $C_{6-8}$-Reste sind, wobei bestimmte Reste $R_2$ bis $R_4$ mit dem N-Atom, mit dem sie verknüpft sind, einen aromatischen oder alicyclischen Heterocyclus bilden können.

26. Emulgatorsystem nach Anspruch 24 oder 25, dadurch gekennzeichnet, daß das bzw. die polyfunktionnelle(n) stickstoffhaltige(n) Carbonsäuresalz(e), das bzw. die den Zusatz bilden, den Formeln

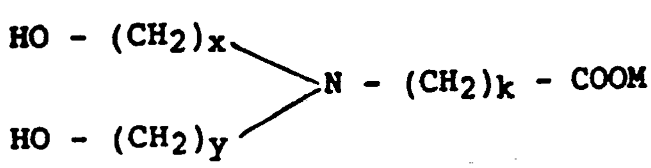

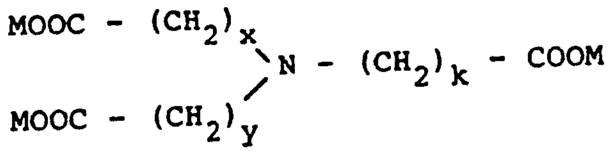

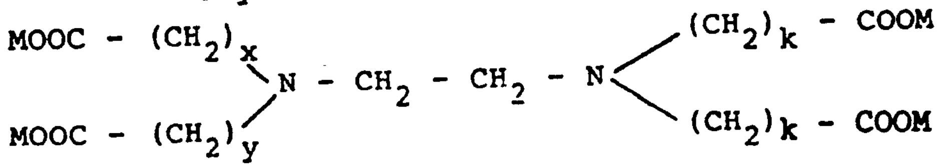

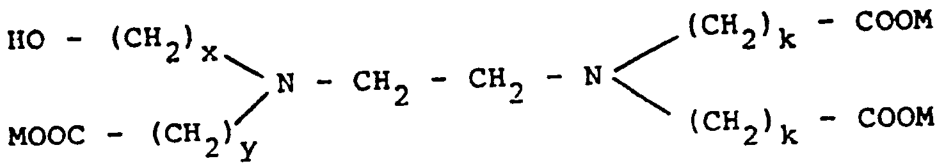

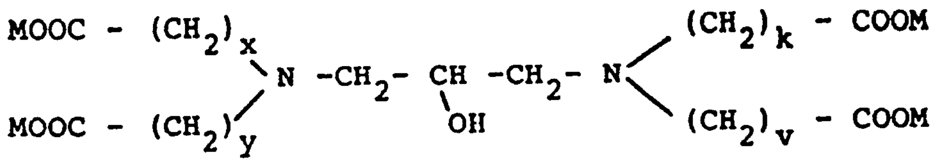

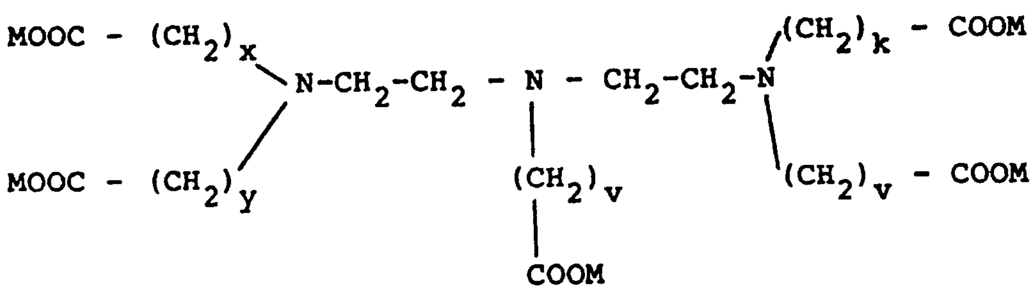

entspricht bzw. entsprechen, wobei in diesen Formeln x, y, v und k gleiche oder verschiedene ganze Zahlen von 1 bis 6 bezeichnen und M die in Anspruch 24 angegebene Bedeutung hat.

27. Emulgatorsystem nach einem der Ansprüche 24 bis 26, dadurch gekennzeichnet, daß der Gewichtsanteil des kationischen stickstoffhaltigen Emulgators 10 bis 99% der Gesamtgewichtsmenge des Emulgators und Zusatzes ausmacht.

28. Emulgatorsystem nach einem der Ansprüche 24 bis 27, dadurch gekennzeichnet, daß der kationische stickstoffhaltige Emulgator in der Emulsion aus einem oder mehreren kationischen stickstoffhaltigen Emulgatoren vom Typ der Fettmonoamine, der Polyamine, der Amidoamine, der Amidopolyamine, der Salze oder Oxide dieser Amine und Amidoamine und der Umsetzungsprodukte dieser Verbindungen mit Ethylenoxid und/oder Propylenoxid besteht.

29. Emulgatorsystem nach einem der Ansprüche 24 bis 28, dadurch gekennzeichnet, daß der kationische stickstoffhaltige Emulgator in der Emulsion aus einem oder mehreren kationischen stickstoffhaltigen Emulgatoren besteht, ausgewählt unter den Fettmonoaminen der Formel $R_6—NH_2$, worin $R_6$ einen Fettkohlenwasserstoffrest darstellt, und den Polyaminen und Amidopolyaminen der Formel

$$R—X—(C_nH_{2n})—NH_2$$

worin X einen zweiwertigen Rest der Formel

$$-(CO)_r-NH-\left[C_mH_{2m}-NH\right]_p-$$

oder

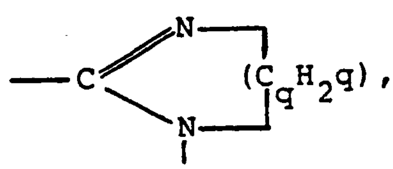

darstellt, R ein Kohlenwasserstoffrest mit bis zu 22 C-Atomen ist, m und n gleich oder verschieden sind und ganze Zahlen von 1 bis 8 bedeuten, p eine ganze Zahl von 0 bis 6 bedeutet, r 0 oder 1 ist und q eine ganze Zahl von 2 bis 10 bedeutet.

30. Emulgatorsystem nach einem der Ansprüche 24 bis 27, dadurch gekennzeichnet, daß der kationische stickstoffhaltige Emulgator gebildet wird durch Vereinigung eines oder mehrerer Emulgatoren

A, ausgewählt unter den kationischen stickstoffhaltigen Emulgatoren vom Typ Monoamine, Diamine, Amidoamine, Oxide dieser Amine oder Amidoamine, Umsetzungsprodukte derartiger Verbindungen mit Propylen- und/oder Ethylenoxid und quaternäre Ammoniumsalze, mit einem oder mehreren Emulgatoren B, ausgewählt unter den kationischen stickstoffhaltigen Emulgatoren, die in ihrem Molekül wenigstens 3 funktionelle Gruppierungen aufweisen, ausgewählt unter den Amin- und Amidgruppierungen auf solche Weise, daß wenigstens eine der genannten funktionellen Gruppierungen eine Amingruppierung ist.

31. Emulgatorsystem nach Anspruch 30, dadurch gekennzeichnet, daß das Gesamtgewichtsverhältnis der Verbindung bzw. Verbindungen A zum Gesamtgewichtsverhältnis der Verbindungen A und B 5 bis 95% beträgt.

32. Emulgatorsystem nach Ansprüch 30 oder 31, dadurch gekennzeichnet, daß die Emulgatoren A ausgewählt sind unter den Monoaminen der Formel $R_6NH_2$, den Diaminen und Amidoaminen der Formel $R—(CO)_r—NH—(C_nH_{2n})—NH_2$, den Aminen der Formel

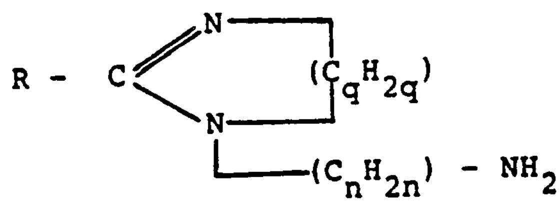

und den quaternären Ammoniumverbindungen der Formel

$$(R_7)_jN^+(R_8)_hY^-$$

während die Emulgatoren B ausgewählt sind unter den Polyaminen und Amidopolyaminen der Formel

$$R - (CO)r - NH \left[ C_mH_{2m} - NH \right]_s (C_nH_{2n}) - NH_2$$

wobei in diesen Formeln R einen Kohlenwasserstoffrest mit bis zu 22 C-Atomen darstellt, m und n gleich oder verschieden sind und ganze Zahlen von 1 bis 8 bedeuten, r 0 oder 1 ist, q eine ganze Zahl von 2 bis 10 bezeichnet, s eine ganze Zahl von 1 bis 6 darstellt, die Reste $R_7$ gleich oder verschieden sind und $C_{6-22}$-Kohlenwasserstoffreste bedeuten, die gegebenenfalls durch eine oder mehrere funktionelle Gruppierungen substituiert sind, die Reste $R_8$ gleich oder verschieden sind und $C_{1-6}$-Alkyl oder -Hydroxyalkylreste darstellen, $Y^-$ das Anion einer Mineral- oder organischen Säure darstellt, h eine ganze Zahl gleich (4—j) und j eine Zahl mit den Werten 1, 2 oder 3 bedeuten.

33. Emulgatorsystem nach Ansprüch 30 bis 31, dadurch gekennzeichnet, daß die Emulgatoren A ausgewählt sind unter den Verbindungen der Formeln

$$R_9 - (CO)_r - NH - (CH_2)_3 - NH_2$$

$$R_9 - (CO)_r - \underset{R_{10}}{\underset{|}{CH}} - (CH_2)_2 - NH_2$$

$$(R_9)_g\ (C_6H_5CH_2)\ \overset{+}{N}\ (R_{10})_1\ Y_1^-$$

$$(R_9)_j\ \overset{+}{N}\ (R_{10})_h\ Y_1^-$$

worin $R_9$ einen $C_{12-22}$-Alkyl- oder -Alkenylrest, $R_{10}$ einen $C_{1-3}$-Alkyl- oder -Hydroxyalkylrest, $Y_1^-$ ein Chlorid- oder Acetatanion bedeuten, 1 eine Zahl gleich (3—g) bedeutet, g eine Zahl mit den Werten 1, 2 oder 3 bedeutet, r gleich 0 oder 1 ist, h eine ganze Zahl gleich (4—j) ist und j eine Zahl mit den Werten 1, 2 oder 3 bezeichnet.

34. Emulgatorsystem nach einem der Ansprüche 30 bis 33, dadurch gekennzeichnet, daß die Emulgatoren B ausgewählt sind unter den Verbindungen der Formeln

$$R_9-\left[NH-(CH_2)_3\right]_f-NH_2$$

und

$$R_9-CO-\left[NH-(CH_2)_3\right]_f-NH_2$$

worin f eine Zahl mit den Werten 2, 3, 4 oder 5 bedeutet und $R_9$ einen $C_{12-22}$-Alkyl- oder -Alkenylrest darstellt.

35. Emulgatorsystem nach einem der Ansprüche 24 bis 34, dadurch gekennzeichnet, daß es außerdem noch einen Verdicker enthält, der aus einer oder mehreren wasserlöslichen organischen Verbindungen besteht, die in einem pH-Bereich von 3 bis 9 die Viskosität einer kationischen Emulsion des Bindemittels Bitumen/Polymer ohne Abänderung der Viskosität der wässerigen Phase alleine zu steigern vermögen.

36. Emulgatorsystem nach Anspruch 35, dadurch gekennzeichnet, daß der Verdicker ein wasserlöslicher Naturgummi ist.

37. Emulgatorsystem nach Anspruch 35, dadurch gekennzeichnet, daß der Verdicker ein wasserlösliches Polyurethan von geringer Molekularmasse ist.

38. Emulgatorsystem nach einem der Ansprüche 35 bis 37, dadurch gekennzeichnet, daß der Gewichtsanteil an Verdicker 5 bis 30% des Gesamtgewichtes der Gesamtheit aus kationischem stickstoffhaltigem Emulgator, Zusatz und Verdicker ausmacht.

39. Emulgatorsystem nach Anspruch 27, dadurch gekennzeichnet, daß der Gewichtsanteil des kationischen stickstoffhaltigen Emulgators 25 bis 90% der Gesamtgewichtsmenge des Emulgators und Zusatzes ausmacht.

40. Emulgatorsystem nach Anspruch 29, dadurch gekennzeichnet, daß in den Formeln der Emulgatoren jeder der Reste $R_6$ und R eine $C_{8-22}$-Alkyl- oder -Alkenylrest ist.

41. Emulgatorsystem nach Anspruch 32, dadurch gekennzeichnet, daß in den Formeln der Emulgatoren der Rest R ein $C_{8-22}$-Alkyl- oder -Alkenylrest ist und der Rest $R_7$ ein $C_{8-22}$-Alkyl- oder -Alkenylrest oder ein Benzylrest ist.

42. Emulgatorsystem nach Anspruch 37, dadurch gekennzeichnet, daß der Verdicker ein wasserlösliches Polyurethan mit einer Molekularmasse von unter 20.000 ist, das das Produkt der Umsetzung eines Polyisocyanats mit einem Polyesterpolyol oder einem Polyetherpolyol darstellt.

43. Verwendung des Emulgatorsystems nach einem der Ansprüche 24 bis 42 zur Herstellung von kationischen Emulsionen von bituminösen Bindemitteln vom Typ Bitumen/Polymer nach einem der Ansprüche 1 bis 23.

**Claims**

1. Cationic emulsions of bituminous binders of the bitumen/polymer type, formed by the dispersion of an organic phase consisting of the bitumen/polymer binder in an aqueous phase including a cationic nitrogenous emulsifier and an acid, the latter being present in a quantity such that the pH of the aqueous phase has a value between 3 and 9, characterised in that the aqueous phase also includes an adjuvant consisting of at least one water-soluble, polyfunctional nitrogenous carboxylic acid salt which, within a pH range of 3 to 9, has a sequestering ability with respect to metal ions equivalent to the fixation of at least 5 mg of calcium ions per gram of salt.

2. Emulsions according to Claim 1, characterised in that the polyfunctional, nitrogenous, carboxylic acid salts constituting the adjuvant correspond to the formula

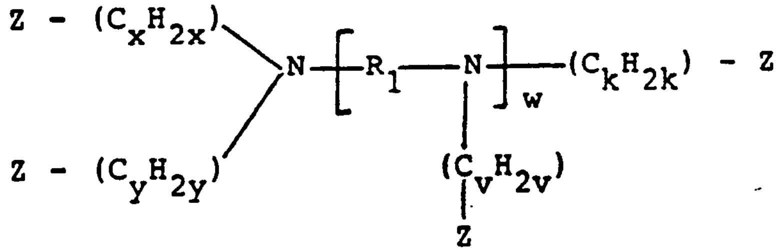

in which the Z radicals, which are identical or different, are radicals selected from the —OH, —COOH and —COOM radicals with at least one Z indicating a —COOM radical, the symbols x, y, v and k are the same of different whole numbers from 1 to 6, w is a number assuming a whole value from 0 to 3, $R_1$ is a divalent $C_1$ to $C_8$ hydrocarbylene radical possibly substituted with one or more functional groups and the symbol M, which may differ from one Z group to another, represents an alkali metal atom, an $—N^+H_3—NH_2$ radical or a radical of the formula

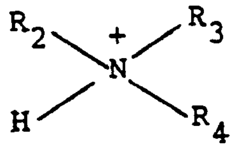

in which the symbols $R_2$ to $R_4$, which are the same or different, each represent a hydrogen atom or an organic radical, possibly including one or more functional groups, some of the $R_2$ to $R_4$ radicals being able to combine to form a heterocyclic ring with the nitrogen atom to which they are attached.

3. Emulsions according to Claim 2, characterised in that the hydrocarbyl radicals, possibly substituted by functional groups, which the symbols $R_2$ to $R_4$ can represent are $C_1$ to $C_8$ alkyl or hydroxyalkyl radicals $C_4$ to $C_8$ cycloalkyl radicals or $C_6$ to $C_8$ aromatic radicals, some of the $R_2$ to $R_4$ radicals being able to form an aromatic or alicyclic heterocyclic ring with the nitrogen atom to which they are attached.

4. Emulsions according to Claim 2 or Claim 3, characterised in that the polyfunctional, nitrogenous carboxylic acid salts constituting the adjuvant correspond to the formulae:

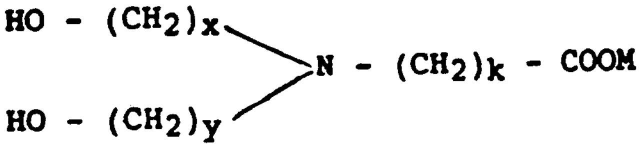

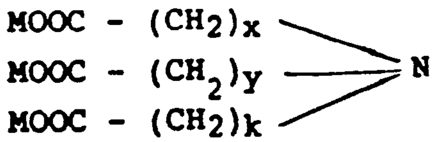

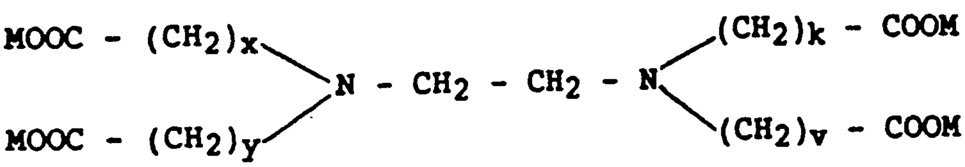

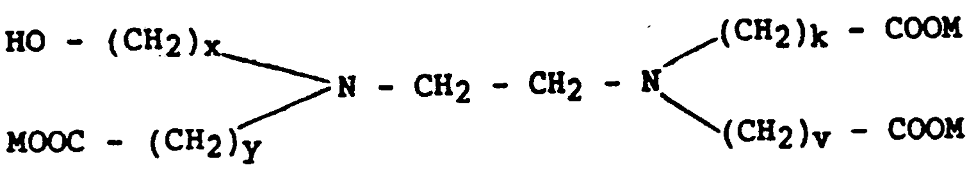

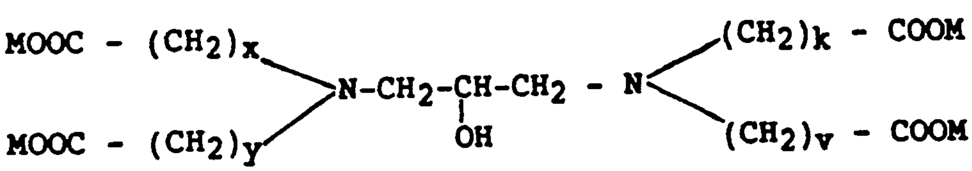

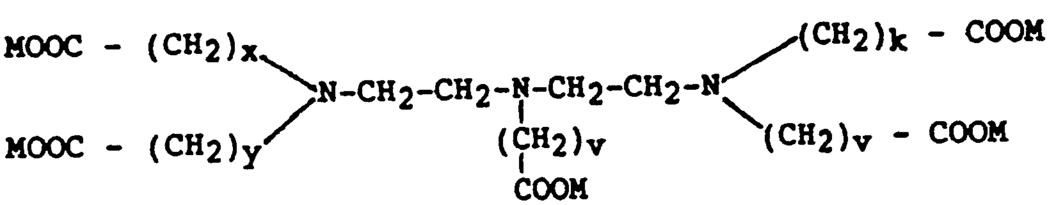

x, y, v and k in these formulae indicating the same or different whole numbers from 1 to 6, and M having the meaning given in Claim 2.

5. Emulsions according to one of Claims 1 to 4, characterised in that the concentration of the carboxylated adjuvant in the aqueous phase of the emulsion is from 0.005% to 0.5%.

6. Emulsions according to one of Claims 1 to 5, characterised in that the cationic nitrogenous emulsifier present in the emulsion consists of one or more cationic nitrogenous emulsifying agents of the types

consisting of fatty monoamines, polyamines, amidoamines, amidopolyamines, salts or oxides of the said amines and amidoamines and products of the reaction of these compounds with ethylene oxide and/or propylene oxide.

7. Emulsions according to one of Claims 1 to 5, characterised in that the cationic nitrogenous emulsifier present in the emulsion consists of one or more cationic nitrogenous emulsifiers selected from the fatty monoamines of the formula $R_6—NH_2$, in which $R_6$ represents a fatty hydrocarbon radical, and polyamines and amidopolyamines of the formula:

$$R—X—(C_nH_{2n})—NH_2$$

where X represents a divalent residue having the formula

$$-(CO)_r-NH\left[C_mH_{2m}-NH\right]_p$$

or 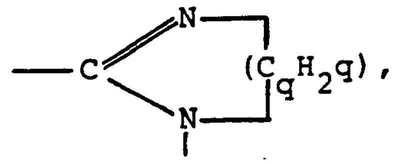

R is a hydrocarbyl radical having up to 22 carbon atoms, m and n, which are the same or different, are whole numbers from 1 to 8, p is a number assuming a whole value from 0 to 6, r is equal to 0 or 1 and q is a whole number from 2 to 10.

8. Emulsions according to one of Claims 1 to 5, characterised in that the cationic nitrogenous emulsifier present in the emulsion is formed by the association of one or more emulsifying agents A selected from cationic nitrogenous emulsifying agents of the types consisting of monoamines, diamines, amidoamines, oxides of these amines or amidoamines, products of the reaction of these compounds with propylene oxide and/or ethylene oxide and quaternary ammonium salts, with one or more emulsifying agents B selected from the cationic nitrogenous emulsifying agents which have in their molecules at least three functional groups selected from the amino and amido groups, such that at least one of the said functional groups is an amino group.

9. Emulsions according to Claim 8, characterised in that the ratio of the total quantity of by weight of the compound or compounds A to the total quantity by weight of the compounds A and B is from 5% to 95%.

10. Emulsions according to Claim 8 or Claim 9, characterised in that the emulsifying agents A are selected from:

— monoamines of the formula $R_6—NH_2$

— diamines and amidoamines of the formula

$$R—(CO)_r—NH—(C_nH_{2n})—NH_2$$

— amines of the formula

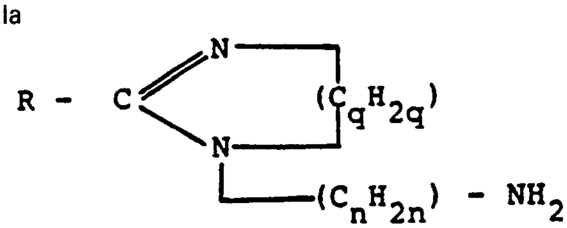

— quaternary ammonium compounds of the formula

$$(R_7)_jN^+\,(R_8)_hY^-$$

whilst the emulsifying agents B are selected from the polyamines and the amidopolyamines of the formula

$$R-(CO)r-NH\left[C_mH_{2m}-NH\right]_s(C_nH_{2n})-NH_2$$

R in these formulae representing a hydrocarbyl radical with up to 22 carbon atoms, m and n, which are the same or different, being whole numbers from 1 to 8, r being equal to 0 or 1, q indicating a whole number from 2 to 10, s representing a whole number from 1 to 6, the $R_7$ radicals which are the same or different, being $C_6$ to $C_{22}$ hydrocarbyl radicals, possibly substituted with one or more functional groups, the $R_8$ radicals, which are the same or different, being $C_1$ to $C_6$ alkyl or hydroxyalkyl radicals, $Y^-$ indicating an anion of a mineral acid or of an organic acid, h being a number equal to (4—j) and j representing a number assuming a value of 1, 2 or 3.

11. Emulsions according to Claim 8 or Claim 9, characterised in that the emulsifying agents A are selected from compounds of the formulae

$$R_9 - (CO)_r - NH - (CH_2)_3 - NH_2$$

$$R_9 - (CO)_r - \underset{\displaystyle R_{10}}{\underset{|}{CH}} - (CH_2)_2 - NH_2$$

$$(R_9)_g\ (C_6H_5CH_2)\ \overset{+}{N}\ (R_{10})_1\ Y_1^-$$

$$(R_9)_j\ \overset{+}{N}\ (R_{10})_h\ Y_1^-$$

in which $R_9$ indicates a $C_{12}$ to $C_{22}$ alkyl or alkenyl radical, $R_{10}$ represents a $C_1$ to $C_3$ alkyl or hydroxyalkyl radical, $Y^-_1$ is a chloride or acetate anion, 1 is a number equal to (3—g), g is a number assuming a value of 1, 2 or 3, r is equal to 0 or 1, h is a number equal to (4—j) and j indicates a number assuming a value of 1, 2 or 3.

12. Emulsions according to one of Claims 8 to 11, characterised in that the emulsifying agents B are selected from compounds of the formulae

$$R_9 \left[ NH - (CH_2)_3 \right]_f NH_2$$

and

$$R_9 - CO \left[ NH - (CH_2)_3 \right]_f NH_2$$

in which f indicates a number assuming a value of 2, 3, 4 or 5 and $R_9$ represents a $C_{12}$ or $C_{22}$ alkyl or alkenyl radical.

13. Emulsions according to one of Claims 1 to 12, characterised in that the total quantity of cationic nitrogenous emulsifier in the emulsion represents 0.03% to 3% by weight of the emulsion.

14. Emulsions according to one of Claims 1 to 13, characterised in that the acid used to control the pH of the emulsion is a mineral acid or a saturated or unsaturated mono- or polycarboxylic acid, possibly hydroxylated.

15. Emulsions according to one of Claims 1 to 14, characterised in that the bitumen/polymer binder is selected from the group consisting of bitumens modified by olefinic polymers or by mixtures of higher alcohols and fatty acids and possibly grafted by elatomers, bitumens modified by norbornene, bitumens modified by dihalopolybutadienes serving as receptors for sequenced copolymers and for co-vulcanisable elastomers, bitumen modified by carboxylated styrene/diene, styrene/isoprene or sytrene/butadiene block copolymers, bitumens modified by polyethylene waxes, bitumens modified by elastomer acrylic polymers, bitumens modified by polyvinyl alcohol, polyamide, polyester or polyurethane polymers, bitumens modified by olefin copolymers or copolymers of olefins and vinyl monomers, bitumens modified by chlorinated elastomers, bitumens modified by special halogenated or siliconated polymers, bitumens modified by the use of a mixture of at least two of the polymers cited above, bituinous compositions obtained by a bitumen being put in contact with a mother solution containing a polymer and sulphur or a polysulpide or a reactive agent as well as a petroleum fraction and/or a coal oil and mixtures of such modified bitumens.

16. Emulsions according to one of Claims 1 to 15, characterised in that in their aqueous phases they also include a thickening agent consisting of one or more water-soluble organic compounds which, within a pH range of 3 to 9, can increase the viscosity of the emulsion without modifying the viscosity of the aqueous phase alone.

17. Emulsions according to Claim 16, characterised in that the thickening agent is a water-soluble natural gum.

18. Emulsions according to Claim 16, characterised in that the thickening agent is a water-soluble polyurethane of low molecular weight.

19. Emulsions according to one of Claims 16 to 18, characterised in that the quantity by weight of the thickening agent in the emulsion represents 5 to 30% of the total weight of the cationic nitrogenous emulsifier, the adjuvant and the thickener taken together.

20. Emulsions according to Claim 7, characterised in that each of the $R_6$ and R radicals in the formulae of the emulsifying agents is a $C_8$ to $C_{22}$ alkyl or alkenyl radical.

21. Emulsions according to Claim 10, characterised in that the R radical in the formulae of the emulsifying agents is a $C_8$ to $C_{22}$ alkyl or alkenyl radical and the $R_7$ radical is a $C_8$ to $C_{22}$ alkyl or alkenyl radical, or a benzyl radical.

22. Emulsions according to Claim 15, characterised in that the bitumen polymer binder is a bituminous composition obtained by a bitumen being put in contact with a mother solution containing a styrene/conjugated diene block copolymer and sulphur or a polysulphide as well as a petroleum fraction and/or a coal oil.

23. Emulsions according to Claim 18, characterised in that the thickening agent is a water-soluble polyurethane with a molecular weight less than 20,000 resulting from the reaction of a polyisocyanate with a polyesterpolyol or a polyetherpolyol.

24. A cationic emulsifying system characterised in that it includes a cationic nitrogenous emulsifier consisting of one or more cationic nitrogenous emulsifiers and an adjuvant consisting of at least one water-soluble polyfunctional, nitrogenous carboxylic acid salt or of the precursor acid of the said salt, the salt having, with a pH range of 3 to 9, a sequestering ability with respect to metal ions equivalent to the fixation of at least 5 mg of calcium ions per gram of salt, and corresponding to the formula

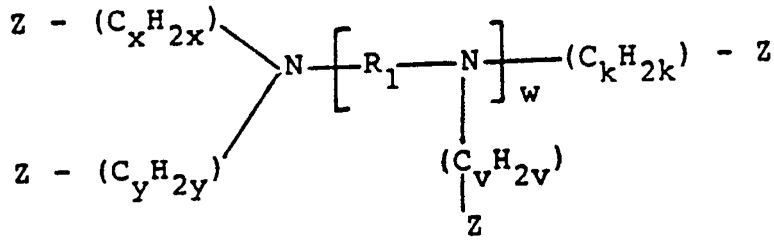

in which the Z radicals, which may be the same or different, are radicals selected from the —OH, —COOH, and —COOM radicals with at least one Z indicating a —COOM radical, the symbols x, y, v and k are the same or different whole numbers from 1 to 6, w is a number assuming a whole value from 0 to 3, $R_1$ is a divalent $C_1$ to $C_8$ hydrocarbylene radical possibly substituted by one or more functional groups and the symbol M, which may differ from one Z group to another, represents an alkali metal atom, an $—N^+H_3—NH_2$ radical, or a radical of the formula

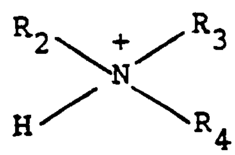

in which the symbols $R_2$ to $R_4$, which are the same or different, each reprsent a hydrogen atom or an organic radical, possibly including one or more functional groups, some of the $R_2$ to $R_4$ radicals being able to combine to form a heterocyclic ring with the nitrogen atom to which they are attached.

25. An emulsifying system according to Claim 24, characterised in that the radicals, which may be substituted by functional groups which the symbols $R_2$ to $R_4$ can represent, are $C_1$ to $C_8$ alkyl or hydroxyalkyl radicals, $C_4$ to $C_8$ cycloalkyl radicals or $C_6$ to $C_8$ aromatic radicals, some of the $R_2$ to $R_4$ radicals being able to form an aromatic or alicyclic heterocyclic ring with the nitrogeneous atom to which they are attached.

26. An emulsifying system according to Claim 24 or Claim 25, characterised in that the polyfunctional nitrogeneous carboxylic acid salts constituting the adjuvant correspond to the formula

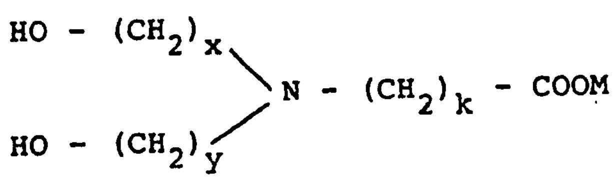

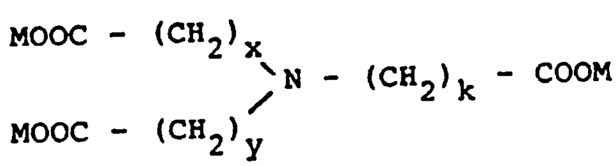

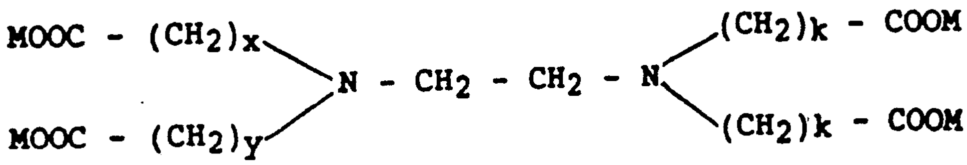

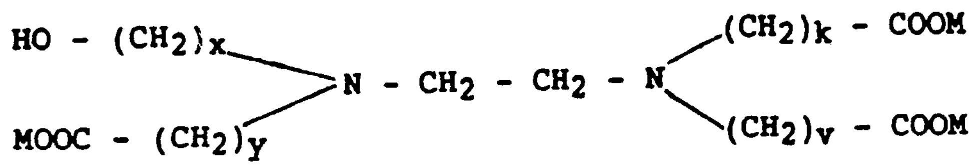

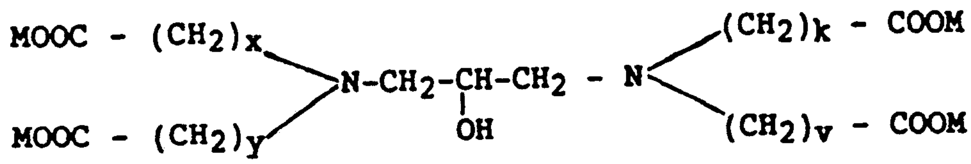

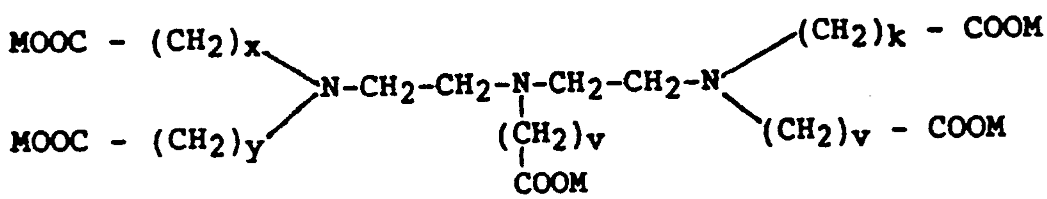

x, y, v and k in these formulae indicating the same or different whole numbers from 1 to 6, and M having the meaning given in Claim 24.

27. An emulsifying system according to one of Claims 24 to 26, characterised in that the quantity by weight of the cationic nitrogeneous emulsifier represents 10 to 99% of the total weight of the emulsifier and the adjuvant.

28. An emulsifying system according to one of Claims 24 to 27, characterised in that the cationic nitrogenous emulsifier consists of one or more cationic nitrogenous emulsifying agents of the types consisting of fatty monoamines, polyamines, the amidoamines, the amidopolyamines, the salts or oxides of the said amines and amidoamines, and the products of the reaction of these compounds with ethylene oxide and/or propylene oxide.

29. An emulsifying system according to one of Claims 24 to 28, characterised in that the cationic nitrogenous emulsifier consists of one or more cationic nitrogenous emulsifiers selected from the fatty monoamines with the formula $R_6—NH_2$, in which $R_6$ represents a fatty hydrocarbon radical, and polyamines and amidopolyamines of the formula

$$R—X—(C_nH_{2n})—NH_2$$

in which X represents a divalent residue of the formula

$$-(CO)_r-NH-\left[C_mH_{2m}-NH\right]_p-$$ or 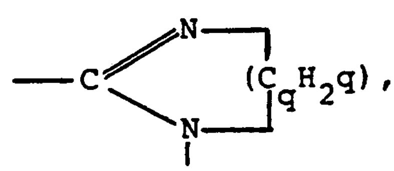

R is a hydrocarbyl radical having up to 22 carbon atoms, m and n, which are the same or different, are whole numbers from 1 to 8, p is a number assuming a whole value from 0 to 6, r is equal to 0 or 1 and q is a whole number from 2 to 10.

30. An emulsifying system according to one of Claims 24 to 27, characterised in that the cationic nitrogenous emulsifier is formed by the association of one or more emulsifying agents A selected from cationic nitrogenous emulsifying agents of the types consisting of monoamines, diamines, amidoamines, oxides of these amines or amidoamines, products of the reaction of these compounds with ethylene oxide and/or propylene oxide and quaternary ammonium salts, with one or more emulsifying agent B selected from the cationic nitrogenous emulsifying agents which have in their molecules at least three functional groups selected from the amino and amido groups, such that at least one of the said functional groups is an amino group.

31. An emulsifying system according to Claim 30, characterised in that the ratio of the total quantity by weight of the compound or compounds A to the total quantity by weight of the compounds A and B is from 5% to 95%.

32. An emulsifying system according to Claim 30 or 31, characterised in that the emulsifying agents A are selected from

— monoamines of the formula $R_6NH_2$,

— diamines and amidoamines of the formula

$$R—(CO)_r—NH(C_nH_{2n})—NH_2$$

— amines of the formula

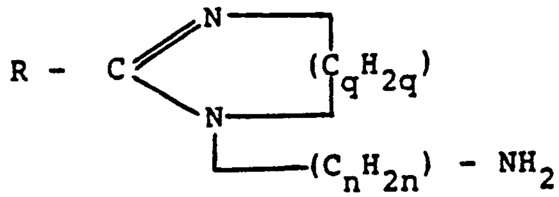

— quaternary ammonium compounds of the formula

$$(R_7)_jN^+(R_8)_hY^-$$

whilst the emulsifying agents B are selected from polyamines and amidopolyamines of the formula

$$R - (CO)r - NH\left[C_mH_{2m} - NH\right]_s(C_nH_{2n}) - NH_2$$

R in these formulae representing a hydrocarbyl radical with up to 22 carbon atoms, m and n, which are the same or different, being whole numbers from 1 to 8, r being equal to 0 or 1, q indicating a whole number from 2 to 10, s representing a whole number from 1 to 6, the $R_7$ radicals, which are the same or different, being $C_6$ to $C_{22}$ hydrocarbyl radicals, possibly substituted with one or more functional groups, the $R_8$ radicals, which are the same or different, being $C_1$ to $C_6$ alkyl or hydroxylalkyl radicals, $Y^-$ indicating an anion of a mineral acid or of organic acids, h being a number equal to (4—j) and j representing a number assuming the values 1, 2 or 3.

33. An emulsifying system according to Claim 30 or Claim 31, characterised in that the emulsifying agents A are selected from the compounds of the formula

$$R_9 - (CO)_r - NH - (CH_2)_3 - NH_2$$

$$R_9 - (CO)_r - \underset{R_{10}}{CH} - (CH_2)_2 - NH_2$$

$$(R_9)_g\ (C_6H_5CH_2)\ \overset{+}{N}\ (R_{10})_1\ Y_1^-$$

$$(R_9)_j\ \overset{+}{N}\ (R_{10})_h\ Y_1^-$$

in which $R_9$ indicates a $C_{12}$ to $C_{22}$ alkyl or alkenyl radical, $R_{10}$ represents a $C_1$ to $C_3$ alkyl or hydroxyalkyl radical, $Y^-_1$ is a chloride or acetate anion, 1 is a number equal to (3—g), g is a number assuming a value of 1, 2 or 3, r is equal to 0 or 1, h is a number equal to (4—j), and j indicates a number assuming a value of 1, 2 or 3.

34. An emulsifying system according to one of Claims 30 to 33, characterised in that the emulsifying agents B are selected from compounds of the formulae

$$R_9\left[NH - (CH_2)_3\right]_f NH_2$$

and

$$R_9 - CO\left[NH - (CH_2)_3\right]_f NH_2$$

in which f indicates a number assuming a value of 2, 3, 4 or 5 and $R_9$ represents a $C_{12}$ to $C_{22}$ alkyl or alkenyl radical.

35. An emulsifying system according to one of Claims 24 to 34, characterised in that it also includes a thickening agent consisting of one or more water-soluble organic compounds which, within a pH range of 3 to 9, can increase the viscosity of a cationic emulsion of bitumen/polymer binder without modifying the viscosity of the aqueous phase of the emulsion alone.

36. An emulsifying system according to Claim 35, characterised in that the thickening agent is a water-soluble natural gum.

37. An emulsifying system according to Claim 35, characterised in that the thickening agent is a water-soluble polyurethane of low molecular weight.

38. An emulsifying system according to one of Claims 35 to 37, characterised in that the quantity by weight of the thickening agent represents 5 to 30% of the total weight of the cationic nitrogenous emulsifier, the carboxylic adjuvant and the thickener taken together.

39. An emulsifying system according to Claim 27, characterised in that the quantity by weight of the cationic nitrogenous emulsifier represents 25 to 90% of the total quantity by weight of the emulsifier and the adjuvant.

40. An emulsifying system according to Claim 29, characterised in that each of the $R_6$ and R radicals in the formulae of the emulsifying agents is a $C_8$ to $C_{22}$ alkyl or alkenyl radical.

41. An emulsifying system according to Claim 32, characterised in that the R radical in the formulae of the emulsifying agent is $C_8$ to $C_{22}$ alkyl or alkenyl radical and the $R_7$ radical is a $C_8$ to $C_{22}$ alkyl or alkenyl radical or a benzyl radical.

42. An emulsifying system according to Claim 37, characterised in that the thickening agent is a water-soluble polyurethane with a molecular weight less than 20,000 resulting from the reaction of a polyisocyanate with a polyesterpolyol or a polyetherpolyol.

43. The application of the emulsifying system according to one of Claims 24 to 42 to the preparation of cationic emulsions of bituminous binders of the bitumen/polymer type according to one of Claims 1 to 23.